# EUROPEAN PATENT SPECIFICATION

(11) **EP 4 521 624 B1**
(45) Date of publication and mention of the grant of the patent: **25.11.2026**
(21) Application number: 22940823.2
(22) Date of filing: 06.05.2022
(51) Int. Cl.: H02M 7/483

(54) **POWER CONVERSION DEVICE**
LEISTUNGSWANDLER
DISPOSITIF DE CONVERSION DE PUISSANCE

(43) Date of publication of application: 12.03.2025
(73) Proprietor: MITSUBISHI ELECTRIC CORPORATION, Chiyoda-ku Tokyo 100-8310 (JP)
(72) Inventor: KAJIYAMA, Takuya, Tokyo 100-8310 (JP); UDA, Ryosuke, Tokyo 100-8310 (JP); TANAKA, Miwako, Tokyo 100-8310 (JP); NAKAYAMA, Akito, Tokyo 100-8310 (JP)
(74) Representative: Witte, Weller & Partner Patentanwälte mbB
(86) International application number: PCT/JP2022/019568
(87) International publication number: WO 2023/214462

(56) References cited:
- EP-A1- 4 224 693
- WO-A1-2016/017517
- WO-A1-2022/070269
- JP-B1- 6 926 355
- BEHROUZIAN EHSAN ET AL: "Investigation of negative sequence injection capability in H-bridge multilevel STATCOM", 2014 16TH EUROPEAN CONFERENCE ON POWER ELECTRONICS AND APPLICATIONS, IEEE, 26 August 2014 (2014-08-26), pages 1 - 10, XP032651287, DOI: 10.1109/EPE.2014.6910883

## Description

### TECHNICAL FIELD

The present disclosure relates to a power conversion device.

### BACKGROUND ART

As a large-capacity power conversion device installed in a power system, a modular multilevel converter (MMC) is known in which multiple unit converters (hereinafter, also referred to as "converter cells") are cascade-connected. The converter cell includes multiple switching elements and a power storage element (e.g., a capacitor).

In the modular multilevel converter, in order to obtain a desired control output, it is necessary to maintain the voltages (hereinafter, also referred to as "capacitor voltages") of the power storage elements of individual converter cells close to a target value. If the capacitor voltages deviate from the target value, the output voltages of the converter cells are not as directed, causing a concern that the control characteristics may be deteriorated by generation of an unintended circulating current, etc. If this is significant, the capacitor voltage in any of the converter cells may excessively increase to a level of overvoltage protection or excessively decrease to a level of low-voltage protection level, and the operation of the MMC may thereby stop.

Typically, the capacitor voltages are controlled in multiple levels by the balance control of the converter cells as a whole within the MMC, and the balance control between certain groups (e.g., arms or phases), in addition of the balance control for each of individual converter cells.

The power conversion device according to Japanese Patent Laying-Open No. 2016-123159 (PTL 1) is configured to include legs to allow the current to flow through a current route that does not affect the load power while ceasing the current output to the load so that capacitors included in a unit power converter provide the same voltage within the same phase depending on a balance within the phase.

The power conversion device according to Japanese Patent Laying-Open No. 2019-30106 (PTL 2) generates a second circulating-current command value to set the circulating current when the AC power flowing in and out between an AC electrical path and a power convertor is less than a reference value, the second circulating-current command value being set so that a time average value of a power, calculated by multiplying the circulating current by the AC voltage of the AC electrical path, is zero.

PLT 3 relates to a power conversion device that comprises: a self-exciting power converter that performs power conversion between an AC circuit and a DC circuit; and a control device that controls the switching operation of switching elements included in the self-exciting power converter. The control device executes a first control for increasing the switching frequency of the switching elements when a control command value for the self-exciting power converter is greater than or equal to a first threshold value.

NPLT 1 relates to an investigation of negative sequence injection capability in H-bridge multilevel STATCOM.

### CITATION LIST

### PATENT LITERATURE

PTL 1: Japanese Patent Laying-Open No. 2016-123159
PTL 2: Japanese Patent Laying-Open No. 2019-30106
PLT 3: WO 2022/070269 A1

### NON-PATENT LITERATURE

NPTL 1: BEHROUZIAN EHSAN ET AL: "Investigation of negative sequence injection capability in H-bridge multilevel STATCOM", 2014 16TH EUROPEAN CONFERENCE ON POWER ELECTRONICS AND APPLICATIONS, IEEE, 26 August 2014 (2014-08-26), pages 1-10, XP032651287, DOI: 10.1109/EPE.2014.6910883

### SUMMARY OF INVENTION

### TECHNICAL PROBLEM

PTL 1 considers keeping the capacitor voltages at the rated value and reducing the current distortion of a converter while the load operation is stopped. PTL 2 considers, when the AC power is less than a reference value, causing, by the second circulating-current command value, the individual balance controls to function and setting the second circulating-current command value so that the time average value of the power is zero, thereby preventing the average capacitor-voltage value from varying. However, if, for example, the harmonics component of the system voltage increases, the capacitor voltages may lose the balance even while the current output to the load is not ceased or even if the AC power is greater than or equal to the reference value.

An object of a certain aspect of the present disclosure is to provide a power conversion device which can stably control the capacitor voltages of the converter cells.

### SOLUTION TO PROBLEM

According to the present disclosure, power conversion devices as defined in independent claims are provided. Further embodiments of the claimed invention are defined in the dependent claims. Although the claimed invention is only defined by the claims, the below embodiments, examples, and aspects are present for aiding in understanding the background and advantages of the claimed invention.

### ADVANTAGEOUS EFFECTS OF INVENTION

According to the power conversion device of the present disclosure, the balance of the capacitor voltages of the converter cells can be stably controlled.

### BRIEF DESCRIPTION OF DRAWINGS

Fig. 1 is a schematic configuration diagram of a power conversion device.
Fig. 2 is a circuit diagram showing one example of a converter cell.
Fig. 3 is a block diagram showing one example hardware configuration of a control device.
Fig. 4 is a block diagram showing an overall configuration of the control device.
Fig. 5 is a block diagram showing an operation of an arm-common controller.
Fig. 6 is a diagram for illustrating an operation of an AC control unit included in the arm-common controller.
Fig. 7 is a diagram for illustrating an operation of a DC control unit included in the arm-common controller.
Fig. 8 is a block diagram showing an operation of a u-phase arm controller.
Fig. 9 is a block diagram showing an operation of a cell individual controller for a positive-side arm.
Fig. 10 is a diagram showing a relationship between an inter-phase balance voltage command value, a capacitor voltage of the converter cell, and a circulating-current command value.
Fig. 11 is a diagram illustrating one example of changes over time in maximum value and minimum value of capacitor voltages.
Fig. 12 is a diagram illustrating another example of changes over time in maximum value and minimum value of capacitor voltages.
Fig. 13 is a diagram illustrating one example of changes over time in arm voltage, circulating current, and arm power.
Fig. 14 is a diagram illustrating another example of changes over time in arm voltage, circulating current, and arm power.
Fig. 15 is a diagram illustrating still another example of changes over time in arm voltage, circulating current, and arm power.

### DESCRIPTION OF EMBODIMENTS

Hereinafter, embodiments are described, with reference to the accompanying drawings. In the following description, like reference signs refer to like parts. Their names and functionalities are also the same. Thus, detailed description thereof will not be repeated.

### <Schematic Configuration of Power Conversion Device>

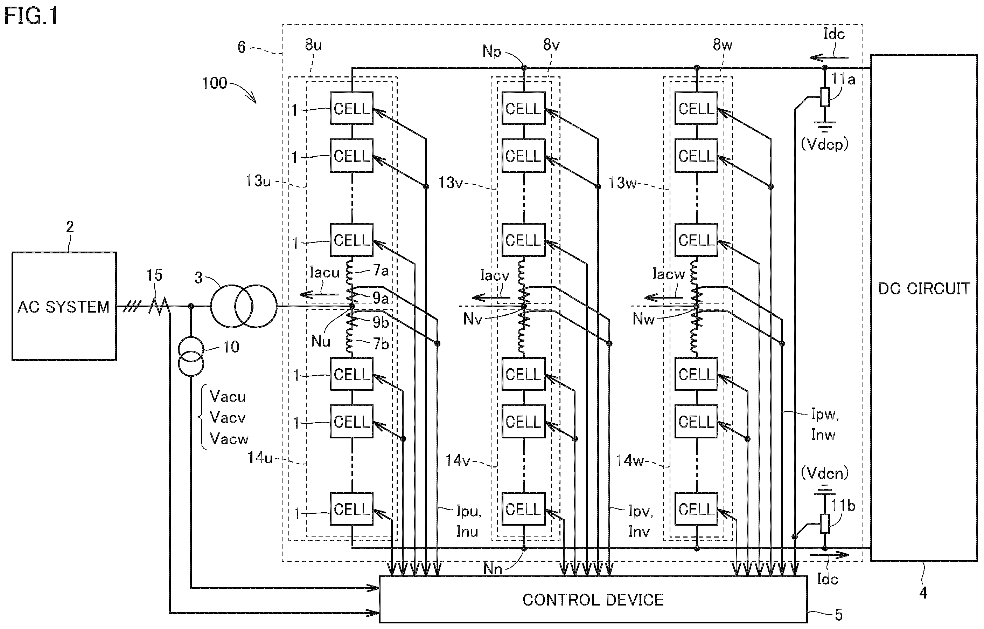

Fig. 1 is a schematic configuration diagram of a power conversion device 100. The power conversion device 100 is connected between an alternating-current (AC) system 2 and a direct-current (DC) circuit 4, and is, for example, a power conversion device which is used for high-voltage DC power transmission.

Referring to Fig. 1, the power conversion device 100 includes a voltage source power converter 6, which converts power between the AC system 2 and the DC circuit 4, and a control device 5. Typically, the power converter 6 is configured of a modular multilevel converter (MMC) power converter which includes multiple converter cells (corresponding to "CELL" in Fig. 1) 1 that are connected in series. Note that the "converter cell" will also be referred to as a "sub module" or "unit converter."

The power converter 6 includes multiple arms for each phase of the AC system 2. Specifically, the power converter 6 includes multiple leg circuits 8u, 8v, 8w (hereinafter, described as a "leg circuit 8" when referring to them collectively or referring to any of them) which are connected in parallel between a positive-side DC terminal (i.e., a high-potential-side DC terminal) Np and a negative-side DC terminal (i.e., a low-potential-side DC terminal) Nn.

The leg circuit 8 is provided for each of the AC phases. The leg circuit 8 is connected between the AC system 2 and the DC circuit 4 and performs power conversion between the two. Fig. 1 shows the AC system 2 for three-phase AC current, which includes three leg circuits 8u, 8v, and 8w for u phase, v phase, and w phase, respectively. Note that if the AC system 2 is for a single-phase AC current, two leg circuits are provided.

AC terminals Nu, Nv, and Nw, which are respectively included in the leg circuits 8u, 8v, and 8w, are connected to the AC system 2 via a transformer 3. The AC system 2 is, for example, an AC power system, including an AC power supply, etc. For ease of illustration, Fig. 1 does not show the connections between the AC terminals Nv, Nw and the transformer 3. The DC terminals (i.e., a positive-side DC terminal Np, a negative-side DC terminal Nn), which are commonly provided for the respective leg circuits 8, are connected to the DC circuit 4. The DC circuit 4 is, for example, a DC power system, including a DC power grid and other power conversion device which performs DC output, etc.

Instead of using the transformer 3 of Fig. 1, the leg circuits 8u, 8v, 8w may be connected to the AC system 2 via an interconnection reactor. Furthermore, the leg circuits 8u, 8v, 8w may include primary windings, instead of the AC terminals Nu, Nv, Nw, and the leg circuits 8u, 8v, 8w may be AC-coupled to the transformer 3 or the interconnection reactor via secondary windings that are magnetically coupled to the primary windings. In this case, the primary windings may be reactors 7a and 7b described below. In other words, the leg circuit 8 is electrically (i.e., DC- or AC-) coupled to the AC system 2 via the connections such as the AC terminals Nu, Nv, Nw or the above-described primary windings, which are included in the leg circuits 8u, 8v, 8w.

The leg circuit 8u is divided into a positive-side arm 13u extending from the positive-side DC terminal Np to the AC terminal Nu and a negative-side arm 14u extending from the negative-side DC terminal Nn to the AC terminal Nu. A point of connection between the positive-side arm 13u and the negative-side arm 14u is connected to the transformer 3, as the AC terminal Nu. The positive-side DC terminal Np and the negative-side DC terminal Nn are connected to the DC circuit 4. The leg circuit 8v includes a positive-side arm 13v and a negative-side arm 14v. The leg circuit 8w includes a positive-side arm 13w and a negative-side arm 14w. The leg circuits 8v, 8w have the same configuration as the leg circuit 8u. Thus, in the following, the leg circuit 8u will be representatively described.

In the leg circuit 8u, the positive-side arm 13u includes cascade-connected converter cells 1, and a reactor 7a. The converter cells 1 and the reactor 7a are connected in series. The negative-side arm 14u includes cascade-connected converter cells 1, and a reactor 7b. The converter cells 1 and the reactor 7b are connected in series. 13u. The reactor 7b may be insert anywhere in the negative-side arm 14u. There can be multiple reactors 7a and reactors 7b. The reactors may have different inductance values. Furthermore, only the reactor 7a of the positive-side arm 13u, or only the reactor 7b of the negative-side arm 14u may be provided.

The power conversion device 100 further includes an AC voltage detector 10, an AC current detector 15, a DC voltage detectors 11a, 11b, and the arm current detectors 9a, 9b which are provided in the respective leg circuits 8. These detectors measure the electrical quantities (i.e., currents, voltages) which are used for the control of the power conversion device 100. Signals detected by the detectors are input to the control device 5.

The AC voltage detector 10 detects a measured AC voltage value Vacu of the u phase of the AC system 2, a measured AC voltage value Vacv of the v phase, and a measured AC voltage value Vacw of the w phase. The AC current detectors 15 are each provided in the u phase, the v phase, and the w phase of the AC system 2, and detect a measured AC current value for each phase. The DC voltage detector 11a detects a measured DC voltage value Vdcp of the positive-side DC terminal Np connected to the DC circuit 4. The DC voltage detector 11b detects a measured DC voltage value Vdcn of the negative-side DC terminal Nn connected to the DC circuit 4.

The arm current detectors 9a, 9b included in the leg circuit 8u for u phase detect a measured positive-side-arm current value Iup flowing through the positive-side arm 13u and a measured negative-side-arm current value Iun flowing through the negative-side arm 14u, respectively. The arm current detectors 9a, 9b included in the leg circuit 8v for v phase detect a measured positive-side-arm current value Ivp and a measured negative-side-arm current value Ivn, respectively. The arm current detectors 9a, 9b included in the leg circuit 8w for w phase detect a measured positive-side-arm current value Iwp and a measured negative-side-arm current value Iwn, respectively. Here, in each of the measured positive-side-arm current values Iup, Ivp, Iwp and the measured negative-side-arm current values Iun, Ivn, Iwn, a current flowing in a direction from the positive-side DC terminal Np to the negative-side DC terminal Nn is positive.

### <Configuration Example of Converter Cell>

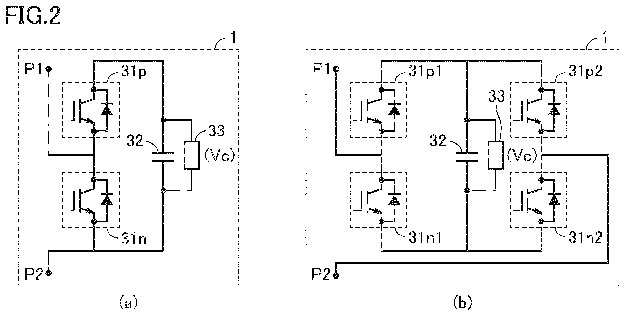

Fig. 2 is a circuit diagram showing one example of the converter cell 1. The converter cell 1 shown in (a) of Fig. 2 has a circuit structure called a half-bridge configuration. The converter cell 1 includes a series body formed of two switching elements 31p, 31n being connected in series, a capacitor 32 as a power storage element, and a voltage detector 33. The series body and the capacitor 32 are connected in parallel. The voltage detector 33 detects a voltage Vc, which is a voltage across the capacitor 32.

The converter cell 1 shown in (b) of Fig. 2 has a circuit structure called a full-bridge configuration. The converter cell 1 includes a first series body formed of two switching elements 31p1, 31n1 being connected in series, and a second series body formed of two switching elements 31p2, 31n2 being connected in series, a capacitor 32, and a voltage detector 33. The first series body, the second series body, and the capacitor 32 are connected in parallel. The voltage detector 33 detects the voltage Vc.

The two switching elements 31p, 31n in (a) of Fig. 2 and the four switching elements 31p1, 31n1, 31p2, 31n2 in (b) of Fig. 2 are configured of, for example, a freewheeling diode being connected in anti-parallel to a self-turn-off semiconductor switching element such as an IGBT, a GCT thyristor, or a metal oxide semiconductor field-effect transistor (MOSFET). In (a) and (b) of Fig. 2, a capacitor such as a film capacitor is mainly used as the capacitor 32.

In the following description, the switching elements 31p, 31n, 31p1, 31n1, 31p2, and 31n2 will also be collectively referred to as a switching element 31. The on/off of the semiconductor switching element included in the switching element 31 is also described simply as "on/off of the switching element 31."

Referring to (a) of Fig. 2, the opposing terminals of the switching element 31n are referred to as input/output terminals P1 and P2. The voltage across the capacitor 32 and zero voltage are output by switching operations of the switching elements 31p and 31n. For example, when the switching element 31p is on and the switching element 31n is off, the voltage across the capacitor 32 is output. When the switching element 31p is off and the switching element 31n is on, zero voltage is output.

Next, referring to (b) of Fig. 2, the mid-point between the switching element 31p1 and the switching element 31n1, and the mid-point between the switching element 31p2 and the switching element 31n2 are the input/output terminals P1 and P2, respectively, of the converter cell 1. The converter cell 1 shown in (b) of Fig. 2 outputs a positive voltage or zero voltage by turning the switching element 31n2 on, the switching element 31p2 off, and alternately turning the switching elements 31p1 and 31n1 on. The converter cell 1 shown in (b) of Fig. 2 can output zero voltage or a negative voltage by turning the switching element 31n2 off, the switching element 31p2 on, and alternately turning the switching elements 31p1 and 31n1 on.

The following description is provided with reference to the converter cell 1 as having the half-bridge configuration shown in (a) of Fig. 2 and use of the semiconductor switching element, and the capacitor as an energy storage element. However, the converter cell 1 may have the full-bridge configuration shown in (b) of Fig. 2. Moreover, any converter cell having a configuration other than those described above may be used, for example, a converter cell having a circuit structure, called a 1.5 half-bridge configuration applied thereto, in which the switching element 31p2 of (b) of Fig. 2 is replaced with a diode only.

### <Hardware Configuration Example of Control Device>

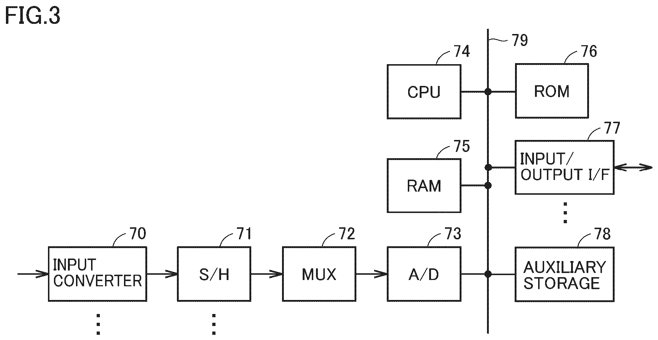

Fig. 3 is a block diagram showing one example hardware configuration of the control device 5. The control device 5 of Fig. 3 is configured based on a computer. Referring to Fig. 3, the control device 5 includes one or more input converters 70, one or more sample and hold (S/H) circuits 71, a multiplexer (MUX) 72, and an analog-to-digital converter 73. The control device 5 further includes one or more central processing units (CPUs) 74, a random access memory (RAM) 75, and a read only memory (ROM) 76. The control device 5 further includes one or more input/output interfaces 77, an auxiliary storage 78, and a bus 79 interconnecting the above components. for each input channel. The auxiliary transformers each convert a detection signal by each electrical-quantity detector of Fig. 1 into a signal at a voltage level suitable for the subsequent signal processing.

The sample and hold circuit 71 is provided for each input converter 70. The sample and hold circuit 71 samples and holds, at a predetermined sampling frequency, a signal representing the electrical quantity received from a corresponding input converter 70.

The multiplexer 72 sequentially selects the signals held by the sample and hold circuits 71. The analog-to-digital converter 73 converts the signal, selected by the multiplexer 72, into a digital value. Note that the analog-to-digital conversions may be performed in parallel on the detection signals of multiple input channels by providing multiple analog-to-digital converters 73.

The CPU 74 controls the entirety of the control device 5, and performs arithmetic operations according to programs. The RAM 75 as a volatile memory, and the ROM 76 as a non-volatile memory are used as primary storages of the CPU 74. The ROM 76 stores settings values for programs and signal processing, etc. The auxiliary storage 78 is a larger-capacity non-volatile memory, as compared to the ROM 76, and stores programs and data such as the electrical-quantity detection values.

The input/output interface 77 is an interface circuit for communications between the CPU 74 and an external device.

Note that at least part of the control device 5 may be configured using a field programmable gate array (FPGA) and an application specific integrated circuit (ASIC), etc. Alternatively, at least part of the control device 5 may be configured of an analog circuit.

### <Overall Configuration of Control Device>

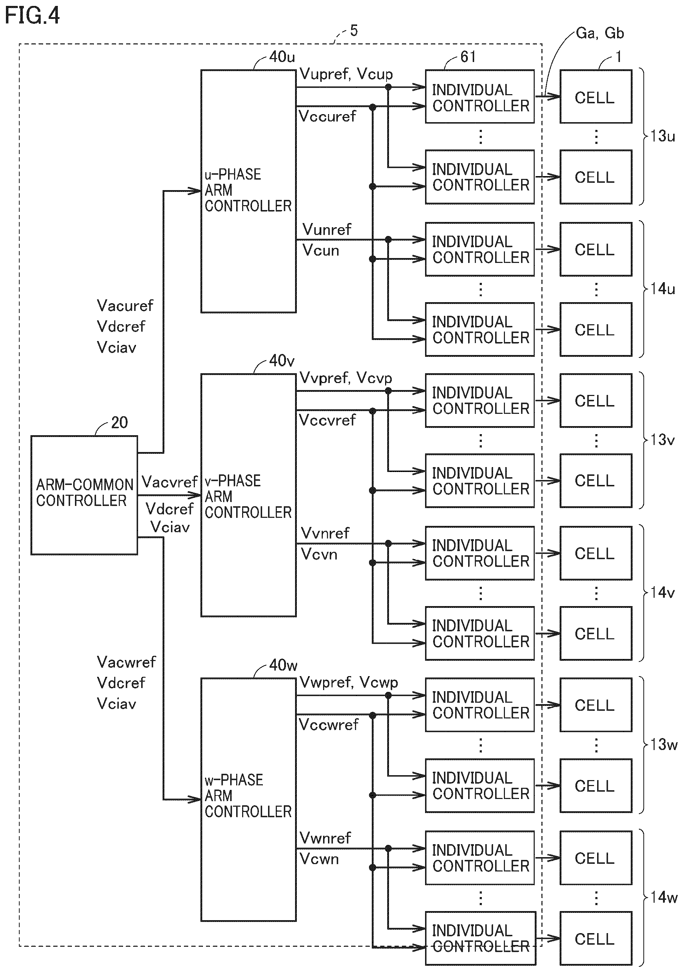

Fig. 4 is a block diagram showing an overall configuration of the control device 5. Fig. 4 also shows respective converter cells 1. Referring to Fig. 3, the control device 5 includes an arm-common controller 20, a u-phase arm controller 40u, a v-phase arm controller 40v, a w-phase arm controller 40w, and respective cell individual controllers 61. The configurations thereof are implemented by, for example, processing circuitry. The processing circuitry may be dedicated hardware or the CPU 74 for executing the programs stored in an internal memory of the control device 5. If the processing circuitry is dedicated hardware, the processing circuitry is configured of, for example, an FPGA, an ASIC, or a combination thereof.

The arm-common controller 20 generates AC voltage command values Vacuref, Vacvref, and Vacwref for u phase, v phase, and w phase, based on measured arm-current values and measured AC voltage values. The arm-common controller 20 further outputs a DC voltage command value Vdcref. The arm-common controller 20 further generates an average capacitor voltage Vciav from measured capacitor voltage values Vci of the respective converter cells 1.

The u-phase arm controller 40u generates a u-phase arm voltage command value, based on the AC voltage command value Vacuref and the DC voltage command value Vdcref received from the arm-common controller 20. The u-phase arm voltage command value includes a positive-side-arm voltage command value Vupref to be output to the positive-side arm 13u and a negative-side-arm voltage command value Vunref to be output to the negative-side arm 14u.

The u-phase arm controller 40u further generates a circulating-voltage command value Vccuref based on an average capacitor-voltage value Vciav received from the arm-common controller 20 and a current u-phase circulating current. The circulating-voltage command value Vccuref is a voltage command value that is commonly output to the respective converter cells 1 of the positive-side arm 13u and the negative-side arm 14u to control the u-phase circulating current.

The u-phase arm controller 40u further outputs an average positive-side-capacitor-voltage value Vcup to the respective cell individual controllers 61 of the positive-side arm 13u. The u-phase arm controller 40u also outputs an average negative-side-capacitor-voltage value Vcun to the respective cell individual controllers 61 of the negative-side arm 14u.

The v-phase arm controller 40v generates a v-phase arm voltage command value, based on the AC voltage command value Vacvref and the DC voltage command value Vdcref. The v-phase arm voltage command value includes a positive-side-arm voltage command value Vvpref to be output to the positive-side arm 13v and a negative-side-arm voltage command value Vvnref to be output to the negative-side arm 14v. The v-phase arm controller 40v further generates a circulating-voltage command value Vccvref, based on the average capacitor-voltage value Vciav received from the arm-common controller 20 and a current v-phase circulating current. The circulating-voltage command value Vccvref is a voltage command value that is commonly output to the respective converter cells 1 of the positive-side arm 13v and the negative-side arm 14v to control the v-phase circulating current. The v-phase arm controller 40v further outputs an average positive-side-capacitor-voltage value Vcvp to the respective cell individual controllers 61 of the positive-side arm 13v. The v-phase arm controller 40v also outputs an average negative-side-capacitor-voltage value Vcvn to the respective cell individual controllers 61 of the negative-side arm 14v.

The w-phase arm controller 40w generates a w-phase arm voltage command value, based on the AC voltage command value Vacwref and the DC voltage command value Vdcref. The w-phase arm voltage command value includes a positive-side-arm voltage command value Vwpref to be output to the positive-side arm 13w and a negative-side-arm voltage command value Vwnref to be output to the negative-side arm 14w. The w-phase arm controller 40w further generates a circulating-voltage command value Vccwref, based on the average capacitor-voltage value Vciav received from the arm-common controller 20 and a current w-phase circulating current. The circulating-voltage command value Vccwref is a voltage command value that is commonly output to the respective converter cells 1 of the positive-side arm 13w and the negative-side arm 14w to control the w-phase circulating current. The w-phase arm controller 40w further outputs an average positive-side-capacitor-voltage value Vcwp to the respective cell individual controllers 61 of the positive-side arm 13w. The w-phase arm controller 40w also outputs an average negative-side-capacitor-voltage value Vcwn to the respective cell individual controllers 61 of the negative-side arm 14w.

The arm controllers 40u, 40v, 40w for each phase transmits the arm voltage command value, the circulating-voltage command value, and the average capacitor-voltage value to the cell individual controllers 61 for corresponding converter cells 1 via optical communication channels.

### <Operation of Arm-Common Controller>

### (Overview)

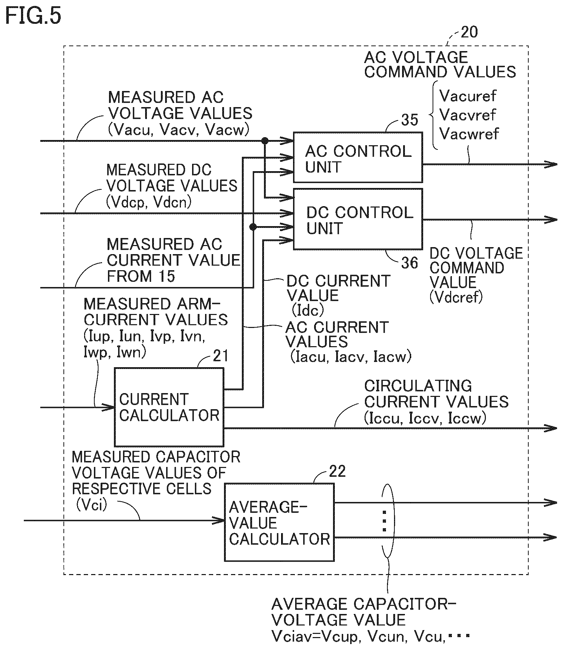

Fig. 5 is a block diagram showing an operation of the arm-common controller 20. Referring to Fig. 5, the arm-common controller 20 includes an AC control unit 35, a DC control unit 36, a current calculator 21, and an average-value calculator 22.

The AC control unit 35 generates the AC voltage command values Vacuref, Vacvref, Vacwref, based on the measured AC voltage values Vacu, Vacv, Vacw detected by the AC voltage detector 10, the measured AC current value detected by the AC current detector 15, and AC current values Iacu, Iacv, Iacw calculated by the current calculator 21.

The DC control unit 36 generates the DC voltage command value Vdcref. The DC control unit 36 has different configurations for a scenario where the power conversion device operates as a rectifier for supplying power from an AC circuit to a DC circuit and a scenario where the power conversion device operates as an inverter. If the power conversion device operates as a rectifier, the DC control unit 36 generates the DC voltage command value Vdcref based on the measured DC voltage values Vdcp, Vdcn. If the power conversion device operates as an inverter, in contrast, the DC control unit 36 generates the DC voltage command value Vdcref, based on the measured AC voltage values Vacu, Vacv, Vacw, the measured AC current value for each phase detected by the AC current detector 15, and a DC current value Idc calculated by the current calculator 21.

### (Operation of Current Calculator)

The current calculator 21 calculates the DC current value Idc, the AC current values Iacu, Iacv, Iacw, and circulating currents Iccu, Iccv, Iccw, based on the measured arm-current values. Specifically, the procedure is as follows:

As shown in Fig. 1, the AC terminal Nu, which is a point of connection between the positive-side arm 13u and the negative-side arm 14u of the leg circuit 8u, is connected to the transformer 3. Accordingly, the AC current value Iacu from the AC terminal Nu to the transformer 3 is a current value, which is obtained by subtracting the measured negative-side-arm current value Iun from the measured positive-side-arm current value Iup, as the following Equation (1):
$Iacu = Iup - Iun$ (1)

Suppose that an average value of the measured positive-side-arm current value Iup and the measured negative-side-arm current value Iun is a common current flowing through the positive-side arm 13u and the negative-side arm 14u, this current is a leg current Icomu flowing through the DC terminal of the leg circuit 8u. The leg current Icomu is represented by Equation (2):
$Icomu = \left(Iup+Iun\right) / 2$ (2)

For the v phase, the AC current value Iacv and the leg current Icomv are calculated, using the measured positive-side-arm current value Ivp and the measured negative-side-arm current value Ivn, and, for the w phase, the AC current value Iacw and the leg current Icomw are calculated, using the measured positive-side-arm current value Iwp and the measured negative-side-arm current value Iwn, which are specifically represented by the following Equations (3) through (6):
$Iacv = Ivp - Ivn$ (3) $Icomv = \left(Ivp+Ivn\right) / 2$ (4) $Iacw = Iwp - Iwn$ (5) $Icomw = \left(Iwp+Iwn\right) / 2$ (6)

The positive-side DC terminals of the leg circuits 8u, 8v, 8w for the respective phases are commonly connected as the positive-side DC terminal Np, and the negative-side DC terminals are commonly connected as the negative-side DC terminal Nn. With this configuration, the current value, obtained by adding up the leg currents Icomu, Icomv, Icomw of the respective phases, is the DC current value Idc that flows into the DC circuit 4 through the positive-side terminal of the DC circuit 4 and is fed back to the DC circuit 4 through the negative-side terminal of the DC circuit 4. Accordingly, the DC current value Idc is represented by Equation (7):
$Idc = Icomu + Icomv + Icomw$ (7)

If the DC current components included in the leg currents are evenly shared between the respective phases, the current capacity of the cells can be equalized. In light of this, the difference between the leg currents and one-third of the DC current value can be calculated as a current value of the circulating current circulating through the power converter 6 (specifically, among the leg circuits 8 of the respective phases), without flowing through the DC circuit 4. Specifically, the u phase, v phase, and w-phase circulating currents Iccu, Iccv, Iccw are represented as the following Equations (8), (9), and (10), respectively:
$Iccu = Icomu - Idc / 3$ (8) $Iccv = Icomv - Idc / 3$ (9) $Iccw = Icomw - Idc / 3$ (10)

### (Operation of Average-Value Calculator)

The average-value calculator 22 calculates various average capacitor-voltage values Vciav from individual measured capacitor voltage values Vci detected at the respective converter cells 1.

Specifically, the average-value calculator 22 calculates an all-capacitor-voltage average value Vcall, which is an average voltage value of all the capacitors included in the entirety of the power converter 6. The average-value calculator 22 also calculates the average positive-side-capacitor-voltage value Vcup, which is an average voltage value of the respective capacitors included in the positive-side arm 13u, the average negative-side-capacitor-voltage value Vcun, which is an average voltage value of the respective capacitors included in the negative-side arm 14u, and the average capacitor-voltage value Vcu, which is an average voltage value of all the capacitors included in the entirety of the leg circuit 8u.

The average-value calculator 22 calculates the average positive-side-capacitor-voltage value Vcvp at the positive-side arm 13v, the average negative-side-capacitor-voltage value Vcvn at the negative-side arm 14v, and the average capacitor-voltage value Vcv across the leg circuit 8v.

The average-value calculator 22 calculates the average positive-side-capacitor-voltage value Vcwp at the positive-side arm 13w, the average negative-side-capacitor-voltage value Vcwn at the negative-side arm 14w, and the average capacitor-voltage value Vcw across the leg circuit 8w. The average capacitor-voltage value Vciav, as used herein, is a generic term for the above various average values.

### (Detailed Operation of AC Control Unit)

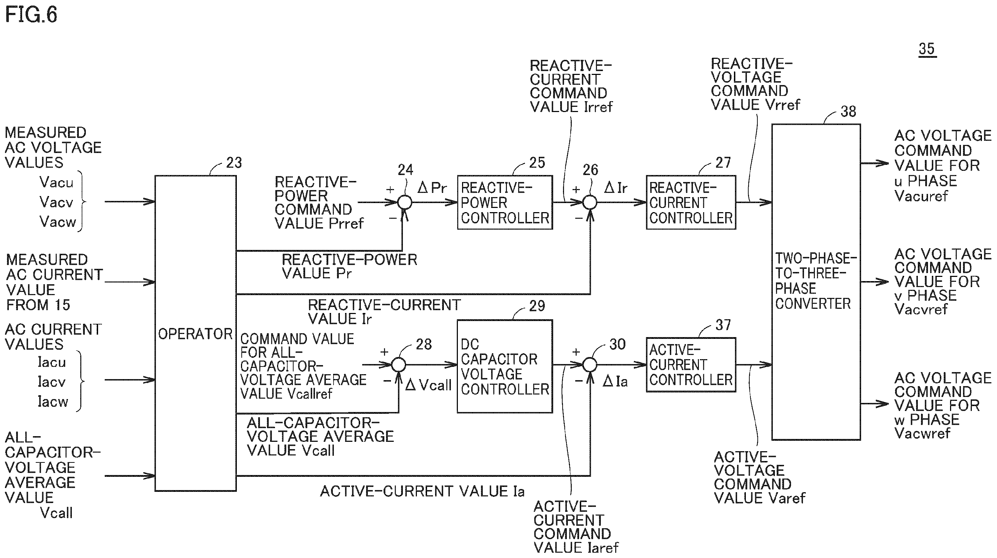

Fig. 6 is a diagram for illustrating an operation of the AC control unit 35 included in the arm-common controller 20. Referring to Fig. 6, the AC control unit 35 includes an operator 23, a reactive-power controller 25, a reactive-current controller 27, a DC capacitor voltage controller 29, and an active-current controller 37. The AC control unit 35 further includes subtractors 24, 26, 28, 30, and a two-phase-to-three-phase converter 38.

The operator 23 receives the measured AC voltage values Vacu, Vacv, Vacw of the respective phases, the measured AC current values of the respective phases of the AC system 2 detected by the AC current detector 15, and the AC current values Iacu, Iacv, Iacw calculated by the current calculator 21. The operator 23 calculates a reactive-power value Pr, based on the measured AC voltage values Vacu, Vacv, Vacw of the respective phases and the measured AC current values of the respective phases. The operator 23 further calculates an active-current value Ia and a reactive-current value Ir, based on the measured AC voltage values Vacu, Vacv, Vacw of the respective phases and the calculated AC current values Iacu, Iacv, Iacw.

The subtractor 24 calculates a deviation ΔPr between given reactive-power command value Prref and the reactive-power value Pr calculated by the operator 23. The reactive-power command value Prref may be a fixed value, or a variation that can be obtained by some calculation.

The reactive-power controller 25 performs a feedback control for causing the reactive-power value Pr to follow the reactive-power command value Prref, thereby generating a reactive-current command value Irref, which is a command value for the reactive current output from the power converter 6. Typically, the reactive-power controller 25 performs a feedback operation for reducing the deviation ΔPr less than a predetermined value (e.g., reducing the deviation ΔPr to zero), thereby generating the reactive-current command value Irref.

The subtractor 26 calculates a deviation ΔIr between the reactive-current command value Irref and the reactive-current value Ir calculated by the operator 23.

The reactive-current controller 27 performs a feedback control for causing the reactive-current value Ir to follow the reactive-current command value Irref, thereby generating a reactive-voltage command value Vrref, which is a command value for the reactive voltage output from the power converter 6. The reactive-current controller 27 performs a feedback operation for reducing the deviation ΔIr less than a predetermined value (e.g., reducing the deviation ΔIr to zero), thereby generating the reactive-current command value Irref.

The subtractor 28 calculates a deviation ΔVcall between a command value Vcallref given for the all-capacitor-voltage average value and the all-capacitor-voltage average value Vcall. As noted above, the all-capacitor-voltage average value Vcall is obtained by averaging the measured capacitor voltage values Vci of the individual cells across the power conversion device. The command value Vcallref may be a fixed value, or a variation that can be obtained by some calculation.

The DC capacitor voltage controller 29 performs a feedback control for causing the all-capacitor-voltage average value Vcall to follow the command value Vcallref, thereby generating an active-current command value Iaref, which is a command value for the active current output from the power converter 6. The DC capacitor voltage controller 29 performs a feedback operation for reducing the deviation ΔVcall less than a predetermined value (e.g., reducing the deviation ΔVcall to zero), thereby generating the active-current command value Iaref. The control by the DC capacitor voltage controller 29 corresponds to a total-voltage balance control in which the average voltage value (i.e., the all-capacitor-voltage average value Vcall) of all the capacitors included in the power converter 6 is caused to follow a command value.

The subtractor 30 calculates a deviation ΔIa between the active-current command value Iaref and the active-current value Ia calculated by the operator 23.

The active-current controller 37 performs a feedback control for causing the active-current value Ia to follow the active-current command value Iaref, thereby generating an active-voltage command value Varef, which is a command value for the active voltage output from the power converter 6. The active-current controller 37 performs a feedback operation for reducing the deviation ΔIa less than a predetermined value (e.g., reducing the deviation ΔIa to zero), thereby generating the active-voltage command value Varef.

Note that the reactive-power controller 25 may be configured as a PI controller which performs a proportional operation and an integration operation on the deviation ΔPr, or may be configured as a PID controller which additionally performs a differential operation. Alternatively, a configuration of other controller used in a feedback control may be used as the reactive-power controller 25. Similarly, the reactive-current controller 27, the DC capacitor voltage controller 29, and the active-current controller 37 each can be configured as a PI controller, a PID controller, or other controller that is used for the feedback control. Moreover, the reactive-power controller 25 and the active-power controller 37 each may be a feedforward control or can be combined with a feedback controller.

The two-phase-to-three-phase converter 38 generates the AC voltage command value Vacuref for u phase, the AC voltage command value Vacvref for v phase, and the AC voltage command value Vacwref for w phase through coordinate transformation from the active-voltage command value Varef and the reactive-voltage command value Vrref. The coordinate transformation by the two-phase-to-three-phase converter 38 can be implemented by, for example, an inverse Park transformation and an inverse Clarke transformation. Alternatively, the coordinate transformation by the two-phase-to-three-phase converter 38 can be implemented by an inverse Park transformation and a space vector transformation.

### (Detailed Operation of DC Control Unit)

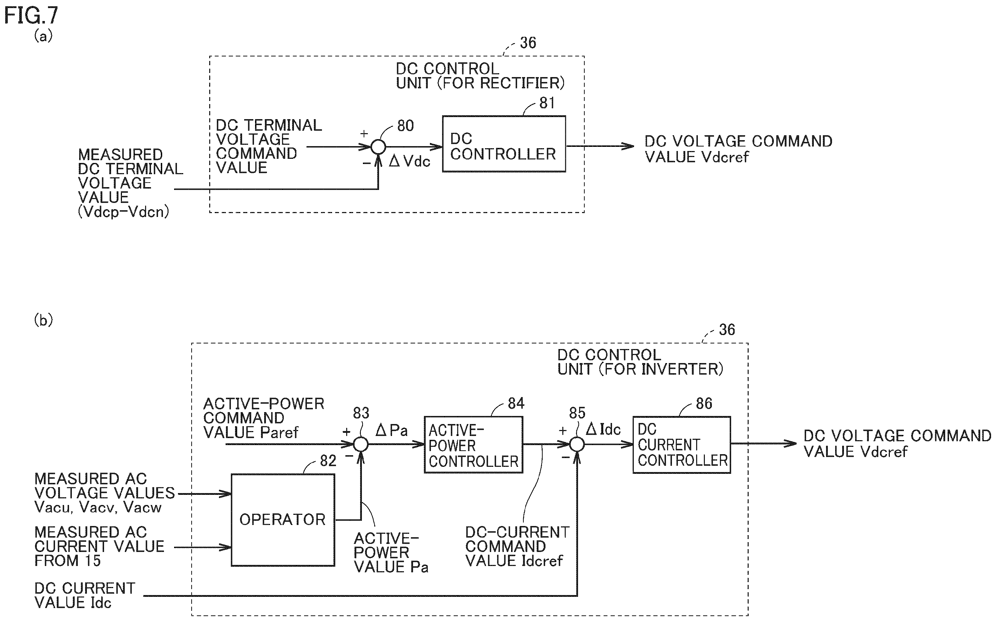

Fig. 7 is a diagram for illustrating an operation of the DC control unit 36 in the arm-common controller 20. Part (a) of Fig. 7 shows a functional block diagram when the power conversion device 100 operates as a rectifier for supplying power from the AC system 2 to the DC circuit 4. Part (b) of Fig. 7 shows a functional block diagram when the power conversion device 100 operates as an inverter for supplying an active power from the DC circuit 4 to the AC system 2. The power conversion device 100 disposed at one end of a DC power transmission line includes the DC control unit 36 having the configuration of (a) of Fig. 7, and the power conversion device 100 disposed at the other end of the DC power transmission line includes the DC control unit 36 having the configuration of (b) of Fig. 7.

Referring to (a) of Fig. 7, the DC control unit 36 for rectifier includes a subtractor 80 and a DC controller 81. The subtractor 80 calculates a deviation ΔVdc between given DC terminal voltage command value and DC terminal voltage value Vdc (= Vdcp - Vdcn). The DC terminal voltage value Vdc is a sending-end voltage which is determined from the measured DC voltage values Vdcp, Vdcn detected by the DC voltage detectors 11a, 11b. The DC controller 81 performs a feedback control for causing the DC terminal voltage value Vdc to follow the DC terminal voltage command value, thereby generating the DC voltage command value Vdcref, which is a command value for the DC voltage output from the power converter 6. The DC controller 81 performs a feedback operation for reducing the deviation ΔVdc less than a predetermined value (e.g., reducing the deviation ΔVdc to zero), thereby generating the DC voltage command value Vdcref.

Referring to (b) of Fig. 7, the DC control unit 36 for inverter includes an operator 82, subtractors 83, 85, an active-power controller 84, and a DC current controller 86.

The operator 82 receives the measured AC voltage values Vacu, Vacv, Vacw of the respective phases, and the measured AC current values of the respective phases of the AC system 2 detected by the AC current detector 15. The operator 82 calculates an active-power value Pa, based on these voltage values and current values. The subtractor 83 calculates a deviation ΔPa between a given active-power command value Paref and the calculated active-power value Pa. The active-power command value Paref may be a fixed value, or a variation that can be obtained by some calculation.

The active-power controller 84 performs a feedback control for causing the active-power value Pa to follow the active-power command value Paref, thereby generating a DC-current command value Idcref, which is a command value for the DC current output from the power converter 6. The active-power controller 84 performs a feedback operation for reducing the deviation ΔPa less than a predetermined value (e.g., reducing the deviation ΔPa to zero), thereby generating the DC-current command value Idcref.

The subtractor 85 calculates a deviation ΔIdc between the DC-current command value Idcref and the DC current value Idc. As noted above, the DC current value Idc is calculated by the current calculator 21, using the respective measured arm-current values. Note that the DC current value Idc may be directly detected by using the DC current detector.

The DC current controller 86 performs a feedback control for causing the DC current value Idc to follow the DC-current command value Idcref, thereby generating the DC voltage command value Vdcref, which is a command value for the DC voltage output from the power converter 6. The DC current controller 86 performs a feedback operation for reducing the deviation ΔIdc less than a predetermined value (e.g., reducing the deviation ΔIdc to zero), thereby generating the DC voltage command value Vdcref.

Note that the DC controller 81, the active-power controller 84, and the DC current controller 86 each can be configured as a PI controller, a PID controller, or other controller that is used for the feedback control.

### <Operation of Arm Controller for Each Phase>

Operations of the arm controllers 40u, 40v, 40w for the respective phases are now described. In the following, an operation of the u-phase arm controller 40u will be representatively described. Operations of the v-phase arm controller 40v and the w-phase arm controller 40w are the same as the operation of the u-phase arm controller 40u with the u phase being replaced by the v phase and the w phase, respectively.

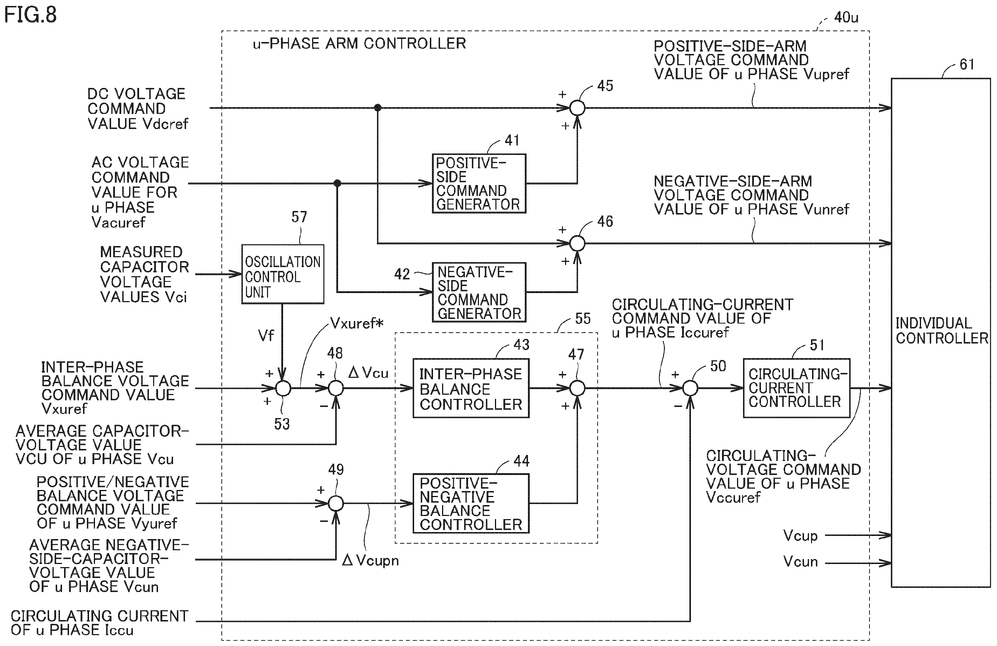

Fig. 8 is a block diagram showing an operation of the u-phase arm controller 40u. Referring to Fig. 8, the u-phase arm controller 40u includes a positive-side command generator 41, a negative-side command generator 42, an inter-group balance control unit 55, and a circulating-current controller 51. The u-phase arm controller 40u further includes adders 45, 46, 53 and subtractors 48, 49, 50.

The adder 45 adds up the DC voltage command value Vdcref and a value obtained by the positive-side command generator 41 multiplying the AC voltage command value Vacuref by -1. This generates the positive-side-arm voltage command value Vupref for u phase.

The adder 46 adds up the DC voltage command value Vdcref and a value obtained by the negative-side command generator 42 multiplying the AC voltage command value Vacuref by +1. This generates the negative-side-arm voltage command value Vunref for u phase.

Based on the measured capacitor voltage values Vci of the respective converter cells 1, the oscillation control unit 57 outputs an oscillating component Vf for causing an inter-phase balance voltage command value Vxuref to oscillate. In order to correct the imbalance between the capacitor voltages of the respective converter cells 1 within an arm, the oscillating component Vf is superimposed onto the inter-phase balance voltage command value Vxuref, depending on a condition described below. Details of the oscillation control unit 57 will be described below.

The adder 53 adds up the oscillating component Vf and the inter-phase balance voltage command value Vxuref. This generates an inter-phase balance voltage command value Vxuref* in which the oscillating component Vf is superimposed on the inter-phase balance voltage command value Vxuref. Typically, the inter-phase balance voltage command value Vxuref is the all-capacitor-voltage average value Vcall. phase balance voltage command value Vxuref* and the average capacitor-voltage value Vcu of the u phase. The deviation ΔVcu refers to variations in voltage of capacitors (i.e., variations in capacitor voltage) between different phases.

The subtractor 49 calculates a deviation ΔVcupn between a positive/negative balance voltage command value Vyuref and the average negative-side-capacitor-voltage value Vcun of the u phase. The positive/negative balance voltage command value Vyuref is the average positive-side-capacitor-voltage value Vcup. The deviation ΔVcupn refers to variations in voltage of capacitors between the positive-side arm 13u and the negative-side arm 14u.

The inter-group balance control unit 55 controls the balance of the voltages of the capacitors 32 between predetermined groups (e.g., between the phases or between the arms), based on a balance command value (e.g., the inter-phase balance voltage command value Vxuref or the positive/negative balance voltage command value Vyuref). Specifically, the inter-group balance control unit 55 generates a circulating-current command value Iccuref for balancing the voltages of the capacitors 32 between the predetermined groups, based on the balance command value. Specifically, the inter-group balance control unit 55 includes an inter-phase balance controller 43, a positive-negative balance controller 44, and an adder 47.

The inter-phase balance controller 43 performs a feedback control for causing the average voltage value of the respective capacitors 32 included in the leg circuit 8u (i.e., the average capacitor-voltage value Vcu) to follow the inter-phase balance voltage command value Vxuref*, thereby controlling the balance of the voltages of the capacitors 32 between phases. Specifically, the inter-phase balance controller 43 performs a feedback operation for reducing the deviation ΔVcu less than a predetermined value (e.g., reducing the deviation ΔVcu to zero). The control by the inter-phase balance controller 43 corresponds to an inter-phase balancing voltage control for causing the average voltage value of all the capacitors included in a phase (e.g., the u phase) (e.g., the average capacitor-voltage value Vcu of the u phase) to match the command value.

The positive-negative balance controller 44 performs a feedback control for causing the average negative-side-capacitor-voltage value Vcun to follow the positive/negative balance voltage command value Vyuref (i.e., the average positive-side-capacitor-voltage value Vcup), thereby controlling the balance of the voltages of the capacitors 32 between the positive-side and negative-side arms. Specifically, the positive-negative balance controller 44 performs a feedback operation for reducing the deviation ΔVcupn less than a predetermined value (e.g., reducing the deviation ΔVcupn to zero).

Note that, when the average negative-side-capacitor-voltage value Vcun is set as the positive/negative balance voltage command value Vyuref, the positive-negative balance controller 44 performs a feedback control for causing the average positive-side-capacitor-voltage value Vcup to follow the average negative-side-capacitor-voltage value Vcun. The control by the positive-negative balance controller 44 corresponds to a balancing voltage control between the positive-side and negative-side arms for causing the average voltage value of all the capacitors (e.g., the average negative-side-capacitor-voltage value Vcun) included in one arm (e.g., the negative-side arm) of a phase (e.g., the u phase) to match the command value (e.g., the average positive-side-capacitor-voltage value Vcup).

The adder 47 adds up the output value (i.e., a result of the feedback operation) of the inter-phase balance controller 43 and the output value of the positive-negative balance controller 44 to generate the circulating-current command value Iccuref for the u phase.

The subtractor 50 calculates the deviation between the circulating-current command value Iccuref and the circulating current Iccu. The circulating-current controller 51 controls the circulating current Iccu, based on the circulating-current command value Iccuref. Specifically, the circulating-current controller 51 performs an operation on the deviation calculated by the subtractor 50 to generate the circulating-voltage command value Vccuref of the u phase for controlling the circulating current Iccu.

The positive-side-arm voltage command value Vupref, the circulating-voltage command value Vccuref, and the average positive-side-capacitor-voltage value Vcup are transmitted to the cell individual controllers 61 of the respective converter cells 1 included in the positive-side arm 13u. Furthermore, the negative-side-arm voltage command value Vunref, the circulating-voltage command value Vccuref, and the average negative-side-capacitor-voltage value Vcun are transmitted to the cell individual controllers 61 of the respective converter cells 1 included in the negative-side arm 14u.

Note that the inter-phase balance controller 43, the positive-negative balance controller 44, and the circulating-current controller 51 each can be configured as, for example, a PI controller, a PID controller, or other controller that is used for the feedback control.

In the above description, the average voltage value of the respective capacitors is used as the voltage representative of the capacitors, the average negative-side-capacitor-voltage value Vcun is used as the voltage representative of the respective capacitors included in the negative-side arm 14u, and the average positive-side-capacitor-voltage value Vcup is used as the voltage representative of the respective capacitors included in the positive-side arm 13u. In other words, the average voltage value is used as the voltage representative. However, the present disclosure is not limited thereto. For example, the voltage representative may be the maximum voltage value, the minimum voltage value, or a median voltage of the respective capacitors, or the voltage value of the capacitor of a representative converter cell.

### <Operation of Cell Individual Controller>

An operation of the cell individual controller 61 provided for each converter cell 1 is now described. In the following, an operation of a cell individual controller 61 for the positive-side arm 13u will be representatively described. An operation of a cell individual controller 61 for the negative-side arm 14u is the same as the operation of the cell individual controller 61 for the positive-side arm 13u with the positive side in the following description being replaced by the negative side. An operation of the cell individual controller 61 for the v phase or the w phase are the same as the operation of the cell individual controller 61 for the positive-side arm 13u with the u phase in the following description being replaced by the v phase or the w phase.

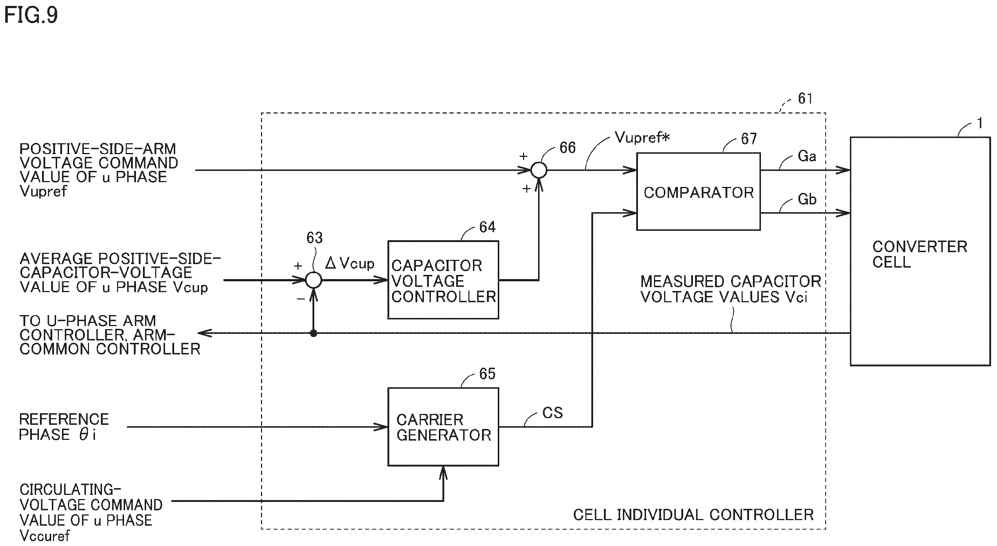

Fig. 9 is a block diagram showing an operation of a cell individual controller 61 for the positive-side arm 13u. In Fig. 9, an analog-to-digital converter for converting the measured capacitor voltage value Vci into a digital value is not shown.

Referring to Fig. 9, the cell individual controller 61 includes a capacitor voltage controller 64, a carrier generator 65, a comparator 67, a subtractor 63, and an adder 66.

The subtractor 63 calculates the deviation ΔVcup between the average positive-side-capacitor-voltage value Vcup as the capacitor voltage command value and the measured capacitor voltage value Vci. As described with respect to Fig. 8, the average positive-side-capacitor-voltage value Vcup is received from the corresponding u-phase arm controller 40u. The measured capacitor voltage value Vci is detected at a corresponding converter cell 1.

The capacitor voltage controller 64 performs a feedback control for causing the measured capacitor voltage value Vci to follow the average positive-side-capacitor-voltage value Vcup. The capacitor voltage controller 64 performs a feedback operation for reducing the deviation ΔVcup less than a predetermined value (e.g., reducing the deviation ΔVcup to zero). The control by the capacitor voltage controller 64 corresponds to an individual balancing voltage control for causing the voltages of the respective capacitors 32 included in one arm (e.g., the positive-side arm) of a phase (e.g., the u phase) to match the command value (e.g., the average voltage value of the respective capacitors). The capacitor voltage controller 64 can be configured as, for example, a proportional controller, a PI controller, a PID controller, or other controller that is used for the feedback control.

The individual balancing voltage control changes the voltages output from the respective converter cells, thereby controlling the distribution of the energy flowing in and out of the arms to the respective converter cells to control the balance of the voltages between the respective converter cells. The individual balancing voltage control, due to its properties, has a reduced effect with a reduced energy flowing in and out of the arms.

The adder 66 adds up the positive-side-arm voltage command value Vupref of the u phase and the output of the capacitor voltage controller 64 to generate a final positive-side-arm voltage command value Vupref* for the u phase.

The carrier generator 65 generates a carrier signal CS, which is used for a phase-shift pulse width modulation (PWM) control. The phase-shift PWM control shifts the timing at which the PWM signal is output to the respective converter cells 1 included in the positive-side arm 13u. This can reduce the harmonics components included in the combined voltage of the output voltages of the respective converter cells 1. For example, based on a common reference phase θi received from the control device 5, the cell individual controllers 61 included in the respective converter cells 1 generate the carrier signals CS whose phases are shifted to each other. For example, a triangular wave is used as the carrier signal CS.

Furthermore, the carrier generator 65 modulates the generated carrier signal CS in accordance with the circulating-voltage command value Vccuref. The carrier generator 65, then, outputs the modulated carrier signal to the downstream comparator 67. The PWM signals (i.e., gate control signals Ga, Gb) generated by the downstream comparator 67 change in pulse width, responsive to the circulating-voltage command value Vccuref. As a result, the deviation between the circulating-current command value Iccuref and the circulating current Iccu is controlled to be even smaller.

The comparator 67 compares the positive-side-arm voltage command value Vupref* and the modulated carrier signal CS based on the circulating-voltage command value Vccuref. According to a result of the comparison, the comparator 67 generates the gate control signals Ga, Gb as PWM-modulated signals for controlling the switching elements 31p, 31n included in the converter cell 1. The gate control signals Ga, Gb are supplied to the control electrodes of the switching elements 31p, 31n, respectively, of Fig. 2.

### <Superimposing of Oscillating Component>

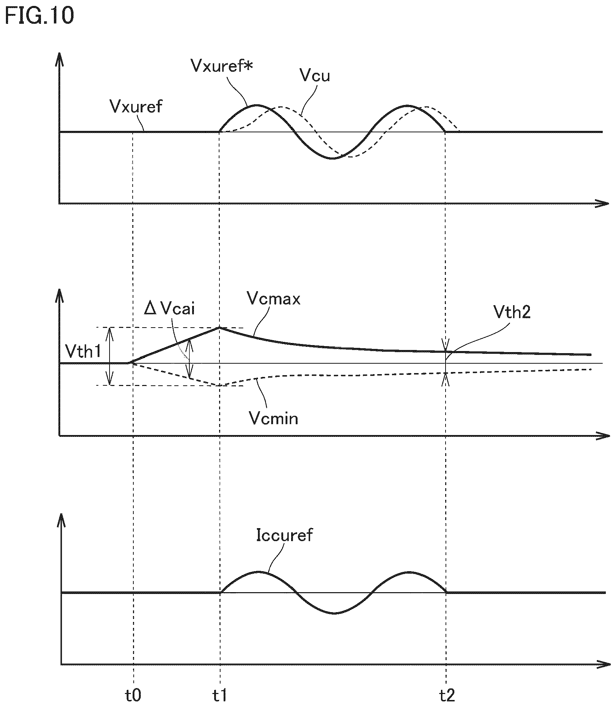

Fig. 10 is a diagram showing a relationship between the inter-phase balance voltage command value, the capacitor voltage of the converter cell, and the circulating-current command value. Referring to Fig. 10, at time t0, the voltages of the respective capacitors 32 (i.e., the capacitor voltages) included in the u-phase arm (e.g., the positive-side arm 13u or the negative-side arm 14u) starts losing the balance. This starts an increase in difference ΔVcai between a maximum voltage value Vcmax and a minimum voltage value Vcmin, among the respective measured capacitor voltage values Vci. The oscillation control unit 57 of Fig. 8 always monitors the difference ΔVcai, based on the voltages of the respective capacitors 32 included in the u-phase arm. oscillation control unit 57 outputs the oscillating component Vf. The oscillating component Vf is an oscillating voltage which has a frequency fl lower than a fundamental frequency Fs (e.g., 60 Hz) of the AC system 2. Typically, the frequency f1 is set to an integer fraction (e.g., 1/6) of the fundamental frequency Fs. Due to this, the adder 53 of Fig. 8 generates the inter-phase balance voltage command value Vxuref* by adding up the inter-phase balance voltage command value Vxuref and the oscillating component Vf. Note that the frequency f1 is not limited to be set to an integer fraction of the fundamental frequency Fs, and may be set, considering the harmonics characteristics on the AC system 2 side, to any frequency that can minimize the effects of the AC system 2.

As illustrated in Fig. 10, it can be understood that at and after time t1, the inter-phase balance voltage command value Vxuref* periodically oscillates due to having the oscillating component Vf having the frequency f1 superimposed thereon. The average capacitor-voltage value Vcu of the u phase follows the inter-phase balance voltage command value Vxuref*. The periodic oscillation of the inter-phase balance voltage command value Vxuref* causes the circulating-current command value Iccuref of the u phase, output from the inter-group balance control unit 55, to vary.

The circulating-current controller 51 of Fig. 8 performs the feedback control to cause the circulating current Iccu to follow the circulating-current command value Iccuref, thereby generating the circulating-voltage command value Vccuref. The cell individual controller 61 of the respective converter cell 1 operates in accordance with the circulating-voltage command value Vccuref. This causes the circulating current Iccu, following the circulating-current command value Iccuref varying as illustrated in Fig. 10, to flow into the power converter 6 (i.e., the circulating current Iccu to increase), allowing the individual balancing voltage control by the cell individual controller 61 (specifically, the capacitor voltage controller 64) of the respective converter cell 1 to start effectively function. This gradually reduces the difference ΔVcai at and after time t1.

At time t2, as the difference ΔVcai reaches a threshold Vth2 (provided that Vth2 > 0) less than the threshold Vth1, the oscillation control unit 57 stops the output of the oscillating component Vf. This causes the adder 53 to output the inter-phase balance voltage command value Vxuref, as is, to the inter-phase balance controller 43. Since the inter-phase balance voltage command value Vxuref does not oscillate, the oscillation of the circulating-current command value Iccuref stops. Note that a hysteresis, where Vth1 > Vth2, is provided to prevent frequent switching (what is called, chattering) between start and stop of the oscillating control.

As described above, based on the voltages of the respective capacitors 32 included in the arm, the oscillation control unit 57 causes the inter-phase balance voltage command value Vxuref to oscillate at the frequency f1 less than the fundamental frequency Fs. Specifically, the oscillation control unit 57 extracts the maximum voltage value Vcmax and the minimum voltage value Vcmin from among the measured capacitor voltage values Vci of the respective capacitors 32 included in the arm. The oscillation control unit 57 calculates the difference ΔVcai between the maximum voltage value Vcmax and the minimum voltage value Vcmin, and performs the oscillating control that superimposes the oscillating component Vf having the frequency f1 onto the inter-phase balance voltage command value Vxuref, based on the difference ΔVcai.

Specifically, if the difference ΔVcai is greater than or equal to the threshold Vth1, the oscillation control unit 57 starts the oscillating control (i.e., outputs the oscillating component Vf). After starting the oscillating control, the oscillation control unit 57 stops the oscillating control (i.e., stops the output of the oscillating component Vf) if the difference ΔVcai decreases less than or equal to the threshold Vth2.

Note that the conditions under which the oscillation control unit 57 starts or stops the oscillating control are not limited to the above.

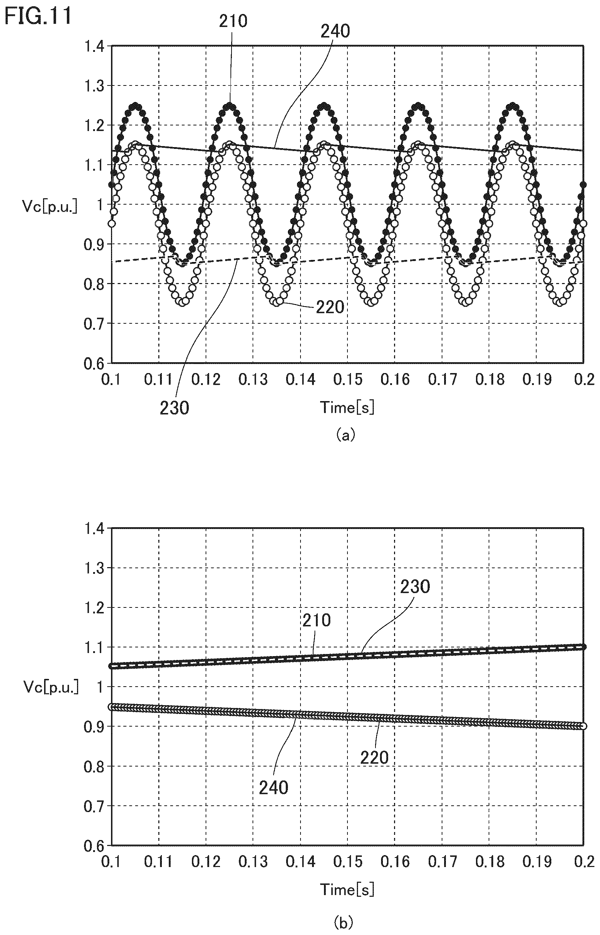

Fig. 11 is a diagram illustrating one example of changes over time in maximum value and minimum value of the capacitor voltages. Specifically, (a) of Fig. 11 illustrates the changes over time when the AC current output of the power converter 6 is large. Part (b) of Fig. 11 illustrates the changes over time when the AC current output of the power converter 6 is small.

Referring to (a) and (b) of Fig. 11, a graph 210 illustrates changes over time in the maximum voltage value Vcmax among the respective capacitors 32 included in the u-phase arm (e.g., the positive-side arm 13u or the negative-side arm 14u). A graph 220 illustrates changes over time in the minimum voltage value Vcmin of the respective capacitors 32. A graph 230 illustrates changes over time in a minimum value min_max among the maximum voltage values Vcmax during a period of time. A graph 240 illustrates changes over time in a maximum value Vmax_min among the minimum voltage values Vcmin during a period of time. Note that the minimum value Vmin_max, among the maximum voltage values Vcmax during the period of time, is a value obtained by suppressing the rates of change in the directions of increases of the respective maximum voltage values Vcmax. Similarly, the maximum value Vmax_min, among the minimum voltage values Vcmin during the period of time, is a value obtained by suppressing the rates of change in the directions of decreases of the respective minimum voltage values Vcmin.

Referring to (a) of Fig. 11, when the AC current output is large, the ripple component of the fundamental wave is large. Thus, the maximum voltage value Vcmax and the minimum voltage value Vcmin greatly fluctuate as illustrated in the graphs 210 and 220.

The minimum value Vmin_max, among the maximum voltage values Vcmax per period of the AC system 2, is generally constant, as illustrated in the graph 230. This is because the rate of change of the minimum value Vmin_max in the direction of increase (i.e., the positive direction) is restricted by applying a rate-of-change suppressing limiter to the minimum value Vmin_max.

The maximum value Vmax_min, among the minimum voltage values Vcmin, is generally constant, as illustrated in the graph 240. This is because the rate of change of the maximum value Vmax_min in the direction of decrease (i.e., the negative direction) is restricted by applying a rate-of-change suppressing limiter to the maximum value Vmax_min.

The oscillation control unit 57 performs an oscillating control that superimposes the oscillating component Vf having the frequency f1 onto the inter-phase balance voltage command value Vxuref, based on a difference ΔVaix between the minimum value Vmin_max and the maximum value Vmax_min. The difference ΔVaix is a value obtained by subtracting the maximum value Vmax_min from the minimum value Vmin_max (i.e., ΔVaix = Vmin_max - Vmax_min).

If the difference ΔVaix is greater than or equal to a threshold Vth3 (provided that Vth3 > 0), the oscillation control unit 57 starts the oscillating control (i.e., outputs the oscillating component Vf). Therefore, if the maximum value Vmax_min is greater than the minimum value Vmin_max as in the example of (a) of Fig. 11, the difference ΔVaix is a negative value, and the oscillating control is, thus, not started. This is because the capacitor voltages are balanced when the difference ΔVaix is a negative value. ripple component of the fundamental wave is small. Thus, the maximum voltage value Vcmax and the minimum voltage value Vcmin have little oscillating component, as illustrated in the graphs 210 and 220. Accordingly, the minimum value Vmin_max illustrated in the graph 230 substantially matches the maximum voltage value Vcmax illustrated in the graph 210, and the maximum value Vmax_min illustrated in the graph 240 substantially matches the minimum voltage value Vcmin illustrated in the graph 220. value Vmin_max is always greater than the maximum value Vmax_min, and the difference ΔVaix is gradually increasing. This suggests that the capacitor voltages start losing the balance. Therefore, if the difference ΔVaix increases greater than or equal to the threshold Vth3, the oscillation control unit 57 starts the oscillating control. If the difference ΔVaix decreases less than or equal to a threshold Vth4 (provided that Vth4 > 0) less than the threshold Vth3, the oscillation control unit 57 stops the oscillating control. A hysteresis, where Vth3 > Vth4, is provided to prevent frequent switching between start and stop of the oscillating control.

In the example of Fig. 11, the rates of change of the minimum value Vmin_max and the maximum value Vmax_min are controlled by applying the rate-of-change suppressing limiters to the minimum value Vmin_max and the maximum value Vmax_min. However, an alternative operation method, such as maintaining the minimum value Vmin_max and the maximum value Vmax_min at the previous values may be employed, instead of the rate-of-change suppressing limiters, if the method can compare the minimum value of the capacitor maximum voltage values during a period of time and the maximum value of the capacitor minimum voltage values during a period of time. In this case, if the oscillation control unit 57 detects, during one period, a maximum voltage value Vcmax that is less than the current minimum value Vmin_max of the maximum voltage values Vcmax, the oscillation control unit 57 updates the minimum value Vmin_max, using the maximum voltage value Vcmax as a new minimum value Vmin_max. If the oscillation control unit 57 detects no maximum voltage value Vcmax less than the current minimum value Vmin_max, the oscillation control unit 57 maintains the current minimum value Vmin_max.

If the oscillation control unit 57 detects, during one period, a minimum voltage value Vcmin that is greater than the current maximum value Vmax_min of the minimum voltage values Vcmin, the oscillation control unit 57 updates the maximum value Vmax_min, using the minimum voltage value Vcmin as a new maximum value Vmax_min. If the oscillation control unit 57 detects no minimum voltage value Vcmin greater than the current maximum value Vmax_min, the oscillation control unit 57 maintains the current maximum value Vmax_min.

Then, if the difference ΔVaix increases greater than or equal to the threshold Vth3, the oscillation control unit 57 starts the oscillating control. If the difference ΔVaix decreases less than or equal to the threshold Vth4 (provided that Vth4 > 0) less than the threshold Vth3, the oscillation control unit 57 stops the oscillating control.

As described above, the oscillation control unit 57 performs the oscillating control, based on the difference ΔVaix between the minimum value Vmin_max and the maximum value Vmax_min during one period, thereby determining whether to start or stop the oscillating control, taking into an account the effects of the ripple component.

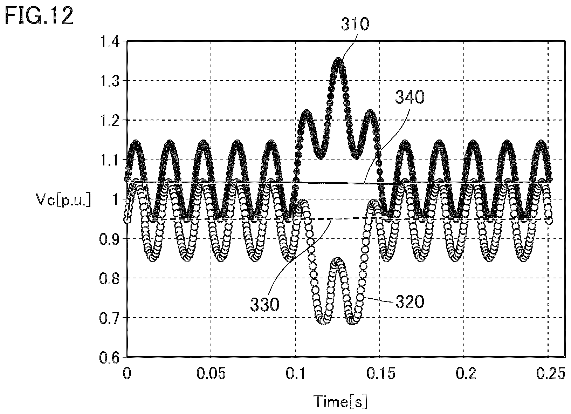

Fig. 12 is a diagram showing another example of changes over time in maximum value and minimum value of the capacitor voltages. Referring to Fig. 12, a graph 310 illustrates changes over time in the maximum voltage value Vcmax of the respective capacitors 32 included in the u-phase arm. A graph 320 illustrates changes over time in the minimum voltage value Vcmin of the respective capacitors 32. A graph 330 illustrates changes over time in the minimum value Vmin_max among the maximum voltage values Vcmax during a period of time. A graph 340 illustrates changes over time in the maximum value Vmax_min among the minimum voltage values Vcmin during a period of time.

As illustrated in the graphs 310 and 320, the maximum voltage value Vcmax suddenly increases and the minimum voltage value Vcmin suddenly decreases around 0.1s to 0.15s, causing the capacitor voltages to be imbalanced. It can be understood that at and after 0.15s, however, the maximum voltage value Vcmax and the minimum voltage value Vcmin return to the steady state (i.e., the capacitor voltages return to be balanced).

As illustrated in the graph 330, the minimum value Vmin_max of the maximum voltage values Vcmax during one period of the AC system 2 is generally constant. This is because the minimum value Vmin_max is restricted from changing in the direction of increase, by applying the rate-of-change suppressing limiter to the minimum value Vmin_max. As illustrated in the graph 340, the maximum value Vmax_min of the minimum voltage values Vcmin is generally constant too. This is because the maximum value Vmax_min is restricted from changing in the direction of decrease, by applying the rate-of-change suppressing limiter to the maximum value Vmax_min.

As described with respect to Fig. 11, the oscillation control unit 57 performs the oscillating control that superimposes the oscillating component Vf having the frequency f1 onto the inter-phase balance voltage command value Vxuref, based on the difference ΔVaix between the minimum value Vmin_max and the maximum value Vmax_min. Because of this, the oscillating control does not start in response to the transitional imbalance in capacitor voltages around 0.1s to 0.15s. Accordingly, the oscillation control unit 57 is able to perform the oscillating control at more appropriate timing.

The oscillation control unit 57 may determine whether to start or stop the oscillating control, focusing on the oscillation of the average capacitor-voltage value.

Large oscillation of the voltage of a capacitor 32 included in an arm suggests that a large energy is flowing in and out of the capacitor. In this case, the individual balancing voltage control is effective, and there is, thus, no need to superimpose the oscillating component onto the inter-phase balance voltage command value. Small oscillation of the voltage of the capacitor 32 included in the arm, in contrast, suggests that a small energy is flowing in and out of the capacitor. In this case, the individual balancing voltage control may not be effective, and there is, thus, the need to superimpose the oscillating component onto the inter-phase balance voltage command value.

From the above description, if the amplitude of the fundamental frequency component of the capacitor voltage representative of the arm (e.g., the average positive-side-capacitor-voltage value Vcup, the capacitor voltage of the representative converter cell included in the positive-side arm) decreases less than or equal to a threshold Vth5, the oscillation control unit 57 starts the oscillating control that superimposes the oscillating component Vf having the frequency f1 onto the inter-phase balance voltage command value Vxuref. If the amplitude of the fundamental frequency component increases greater than or equal to a threshold Vth6 greater than the threshold Vth5, the oscillation control unit 57 stops the oscillating control.

The oscillation control unit 57 may intermittently perform the oscillating control. For example, if the amplitude of the above fundamental frequency component is less than or equal to the threshold Vth5, the oscillation control unit 57 may perform the oscillating control so as to repeatedly alternate between superimposing the oscillating component Vf onto the inter-phase balance voltage command value Vxuref and not superimposing the oscillating component Vf onto the inter-phase balance voltage command value Vxuref. In this case, the oscillation control unit 57 intermittently outputs the oscillating component Vf to the adder 53.

In the present embodiment, while the oscillating control for the u phase has been described by way of example in <Superimposing of Oscillating Component>, the approach is similar for the oscillating controls for the v phase and the w phase.

### <Detailed Effects of Superimposing of Oscillating Component>

As noted above, when the capacitor voltages within an arm become imbalanced, the control device 5 superimposes the oscillating component onto the inter-phase balance voltage command value to cause the circulating-current command value to oscillate, causing the circulating current to flow through the phase. This can cause the individual balancing voltage control to efficiently function.
(1) As described with respect to Fig. 10, if the capacitor voltages within an arm becomes imbalanced at time t1 (e.g., ΔVcai ≥ Vth1), the control device 5 starts the oscillating control. If the imbalance of the capacitor voltages within the arm is suppressed to some extent (e.g., ΔVcai ≤ Vth2) at time t2, the control device 5 stops the oscillating control.

This suggests that the control device 5 performs the oscillating control that causes the inter-phase balance voltage command value, which is used for the balance control over the capacitor voltages between phases, to oscillate depending on the balance of the capacitors 32 within the arm, and when the variations (e.g., ΔVcai) in voltage of the capacitors 32 within the arm fall within a set range (e.g., when ΔVcai ≤ Vth2 stands true), the control device 5 stops the oscillating control. This causes the control device 5 to stop the oscillating control before the capacitors 32 in the same arm provide the same voltage. This is because in the individual balancing voltage control, the variations in capacitor voltage within the same arm (e.g., ΔVcai) may be kept within a certain margin, and there is, therefore, no need for the respective converter cells 1 to provide the same capacitor voltage.

If the oscillating control is caused to continue until the respective converter cells 1 provide completely the same capacitor voltage, in contrast, the circulating current flows for a longer period than necessary, causing an increased loss and a reduction of an available converter current, etc. According to the control device 5 of the present embodiment, such a scenario can be prevented by setting the threshold Vth2 to about 50% of the threshold Vth1, for example.

(2) In the present embodiment, the frequency f1 of the oscillating component Vf is set lower than the fundamental frequency Fs. Therefore, the control is not required to be at high speed. Moreover, typically, the frequency that is an integer multiple of the fundamental frequency of the AC system 2 is important in evaluating the outflow of the harmonics into the AC system 2. Thus, the outflow of an integer-multiple harmonics into the AC system 2 should be reduced. Here, the circulating current having an integer-multiple frequency, flowing into the power converter 6, may be a cause of the outflow of the integer-multiple harmonics into the AC system 2, and is, therefore, desirably, be suppressed. In the present embodiment, by setting the frequency f1 lower than the fundamental frequency Fs, the outflow of the integer-multiple harmonics to the AC system 2 side can be suppressed, and, moreover, even in the event of outflow of the integer-multiple harmonics, the impact on other devices can be suppressed.

Here, an arm voltage (e.g., the u-phase arm voltage); a circulating current (e.g., the u-phase circulating current); and an arm power (hereinafter, also referred to simply as an "arm power") associated with the flow of the circulating current, which is calculated by multiplying the arm voltage by the circulating current, are now considered, where the oscillating component Vf having the frequency f1 of various values is superimposed onto the inter-phase balance voltage command value Vxuref.

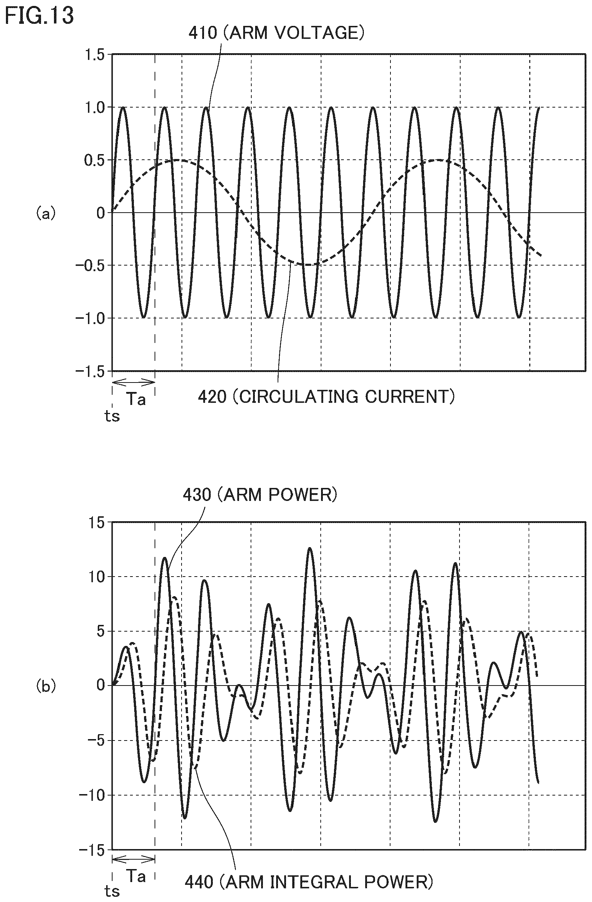

Fig. 13 is a diagram illustrating one example of changes over time in arm voltage, circulating current, and arm power. Specifically, (a) of Fig. 13 illustrates changes over time in arm voltage and circulating current when the frequency f1 is set 0.15 times the fundamental frequency Fs. Part (b) of Fig. 13 illustrates changes over time in arm power and arm integral power when the frequency f1 is set 0.15 times the fundamental frequency Fs.

Referring to (a) of Fig. 13, a graph 410 illustrates changes in arm voltage over time. A graph 420 illustrates changes in circulating current over time. Setting the frequency f1 0.15 times the fundamental frequency Fs results in the frequency of the circulating current being 0.15 times the frequency of the arm voltage. Time Ta corresponds to one period of the arm voltage.

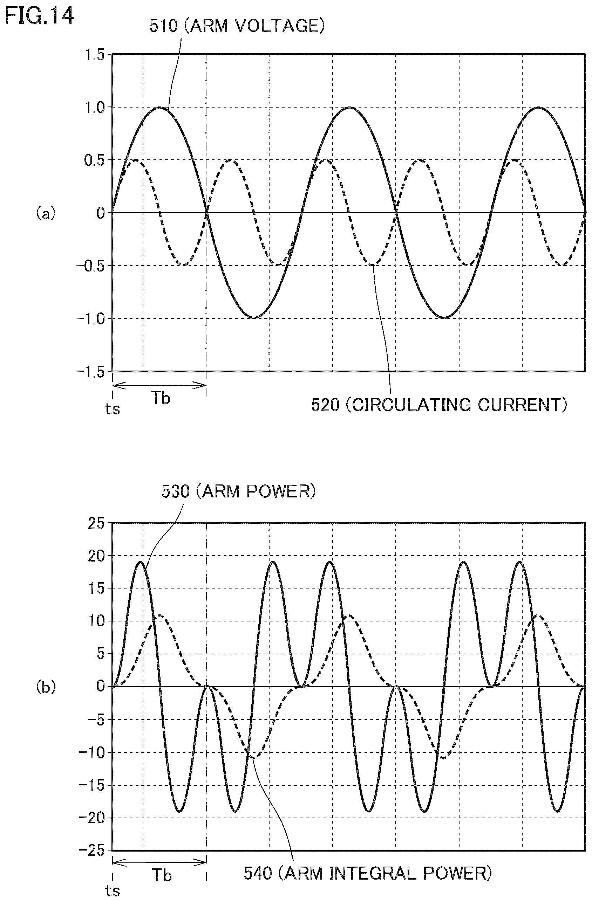

Referring to (b) of Fig. 13, a graph 430 illustrates changes in arm power over time. A graph 440 illustrates changes in arm integral power over time. One period of the arm power is the time period Ta, which is the same as one period of the arm voltage. The arm integral power is not zero at a time instance after the elapse of the time period Ta since time ts (i.e., after the elapse of one period of the arm power). Continuously, the arm integral power does not go to zero each time the time period Ta elapses. This means that the time average value of one period of the arm power does not go to zero. As such, if the frequency f1 is set lower than the fundamental frequency Fs, the time average value of one period of the arm power does not go to zero. time in arm voltage, circulating current, and arm power. Specifically, (a) of Fig. 14 shows changes over time in arm voltage and circulating current when the frequency f1 is set double the fundamental frequency Fs. Part (b) of Fig. 14 shows changes over time in arm power and arm integral power when the frequency f1 is set double the fundamental frequency Fs.

Referring to (a) of Fig. 14, a graph 510 illustrates changes in arm voltage over time, and a graph 520 illustrates changes in circulating current over time. Setting the frequency f1 double the fundamental frequency Fs results in the frequency of the circulating current being double the frequency of the arm voltage. The time period Tb corresponds to one period of the arm voltage.

Referring to (b) of Fig. 14, a graph 530 illustrates changes in arm power over time, and a graph 540 illustrates changes in arm integral power over time. One period of the arm power is the time period Tb, which is the same as one period of the arm voltage. The arm integral power is zero at a time instance after the elapse of the time period Tb since time ts. Continuously, the arm integral power goes to zero each time the time period Tb elapses. This means that the time average value of one period of the arm power goes to zero. As such, if the frequency f1 is set double the fundamental frequency Fs, the time average value of one period of the arm power go to zero. Note that if the frequency f1 is set to an integer multiple equal to greater than twice the fundamental frequency Fs, the time average value of one period of the arm power goes to zero.

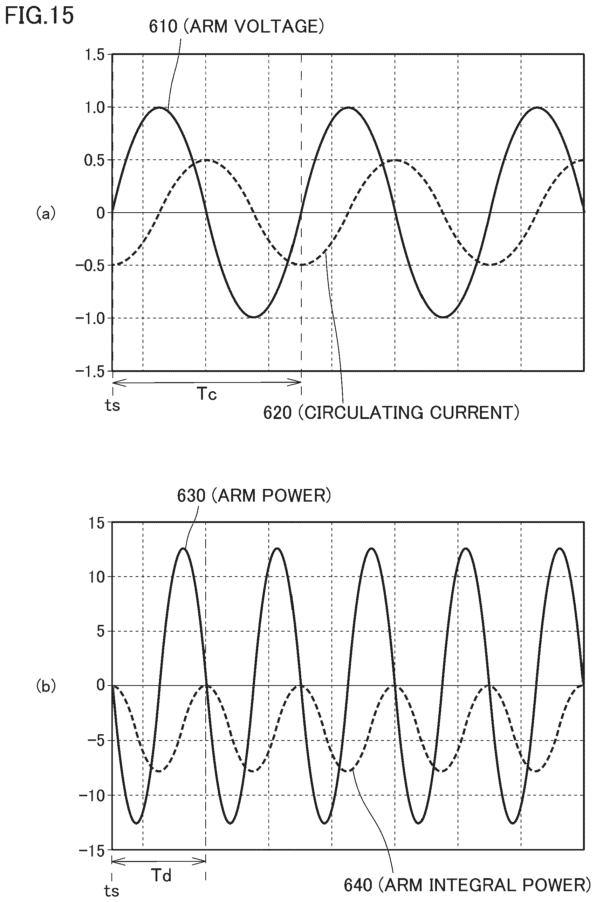

Fig. 15 is a diagram showing still another example of changes over time in arm voltage, circulating current, and arm power. Specifically, (a) of Fig. 15 shows changes over time in arm voltage and circulating current when the frequency f1 is set identical to the fundamental frequency Fs and the phase of the oscillating component Vf is shifted by 90 degrees from the phase of the AC system 2. Part (b) of Fig. 15 shows changes over time in arm power and arm integral power when the frequency f1 is set identical to the fundamental frequency Fs and the phase of the oscillating component Vf is shifted by 90 degrees from the phase of the AC system 2.

Referring to (a) of Fig. 15, a graph 610 illustrates changes in arm voltage over time, and a graph 620 illustrates changes in circulating current over time. Setting the frequency f1 identical to the fundamental frequency Fs results in the frequency of the circulating current being identical to the frequency of the arm voltage. Moreover, the phase of the oscillating component Vf being shifted by 90 degrees from the phase of the AC system 2 results in the phase of the circulating current being shifted by 90 degrees from the phase of the arm voltage. A time period Tc corresponds to one period of the arm voltage.

Referring to (b) of Fig. 15, a graph 630 illustrates changes in arm power over time, and a graph 640 illustrates changes in arm integral power over time. A time period Td corresponds to one period of the arm power. The arm integral power is zero at a time instance after the elapse of the time period Td since time ts. Continuously, the arm integral power goes to zero each time the time period Td elapses. This means that the time average value of one period of the arm power goes to zero. As such, if the frequency f1 is set identical to the fundamental frequency Fs and the phase of the oscillating component Vf is shifted by 90 degrees from the phase of the AC system 2, the time average value of one period of the arm power goes to zero.

According to Figs. 13 to 15, the time average value of one period of the arm power is not zero when the frequency f1 is lower than the fundamental frequency Fs. The time average value of one period of the arm power is zero when the frequency f1 is an integer multiple of the fundamental frequency Fs, or when the frequency f1 is identical to the fundamental frequency Fs and the phase of the oscillating component Vf is shifted by 90 degrees from the phase of the AC system 2. In the present embodiment, it is understood that since the frequency f1 is lower than the fundamental frequency Fs, the time average value of one period of the arm power, therefore, does not go to zero.

### Other Embodiments.

(1) In the embodiments described above, the oscillation control unit 57 superimposes the oscillating component Vf onto the inter-phase balance voltage command value Vxuref. However, the present disclosure is not limited thereto. The oscillation control unit 57 may superimpose the oscillating component Vf onto the positive/negative balance voltage command value Vyuref. In other words, the oscillation control unit 57 may superimpose the oscillating component Vf having the frequency f1 onto either one of the inter-phase balance voltage command value Vxuref (e.g., the all-capacitor-voltage average value Vcall) and the positive/negative balance voltage command value Vyuref (e.g., the average positive-side-capacitor-voltage value Vcup).

### REFERENCE SIGNS LIST

1 converter cell; 2 AC system; 3 transformer; 4 DC circuit; 5 control device; 6 power converter; 7a, 7b reactor; 8u, 8v, 8w leg circuit; 9a, 9b arm current detector; 10 AC voltage detector; 11a, 11b DC voltage detector; 13u, 13v, 13w positive-side arm; 14u, 14v, 14w negative-side arm; 15 AC current detector; 20 arm-common controller; 21 current calculator; 22 average-value calculator; 25 reactive-power controller; 27 reactive-current controller; 29 DC capacitor voltage controller; 31 switching element; 32 capacitor; 33 voltage detector; 35 AC control unit; 36 DC control unit; 37 active-current controller; 38 two-phase-to-three-phase converter; 40u, 40v, 40w arm controller; 41 positive-side command generator; 42 negative-side command generator; 43 inter-phase balance controller; 44 positive-negative balance controller; 51 circulating-current controller; 55 inter-group balance control unit; 57 oscillation control unit; 61 cell individual controller; 64 capacitor voltage controller; 65 carrier generator; 67 comparator; 70 input converter; 71 sample and hold circuit; 72 multiplexer; 73 analog-to-digital converter; 75 RAM; 76 ROM; 77 input/output interface; 78 auxiliary storage; 79 bus; 81 DC controller; 84 active-power controller; 86 DC current controller; and 100 power conversion device.

## Claims

1. A power conversion device (100) connectable to an alternating-current system (2), the power conversion device comprising:
a power converter (6) which includes a plurality of arms (13u, 13v, 13w, 14u, 14v, 14w) for each phase of the alternating-current system; and
a control device (5) to control the power converter, wherein
each arm, among the plurality of arms, has a plurality of converter cells (1) that are cascade-connected,
the plurality of converter cells each have a plurality of switching elements (31p, 31n), and a power storage element (32) connected to the plurality of switching elements, and
the control device includes:
a balance control unit (55) configured to generate a circulating-current command value to control a balance of voltages of power storage elements between the phases or between the arms, based on a balance command value; and
a circulating-current control unit (51) to control a circulating current circulating through the power converter, based on said circulating-current command value, **characterized in that**
the control device includes an oscillation control unit (57) to cause the balance command value to oscillate at a first frequency lower than a fundamental frequency of the alternating-current system, based on the voltages of the power storage elements included in the corresponding arm,
the oscillation control unit is configured to extract a maximum voltage value and a minimum voltage value of the power storage elements included in the corresponding arm, and
the oscillation control unit is configured to perform an oscillating control that superimposes an oscillating component of the first frequency onto the balance command value, based on a first difference between the maximum voltage value and the minimum voltage value, and
the oscillation control unit is configured to start the oscillating control when the first difference is greater than or equal to a first threshold.

2. The power conversion device according to claim 1, wherein
the oscillation control unit is configured, after the oscillating control is started, when the first difference is less than or equal to a second threshold less than the first threshold, to stop the oscillating control.

3. A power conversion device (100) connectable to an alternating-current system (2), the power conversion device comprising:
a power converter (6) which includes a plurality of arms (13u, 13v, 13w, 14u, 14v, 14w) for each phase of the alternating-current system; and
a control device (5) to control the power converter, wherein
each arm, among the plurality of arms, has a plurality of converter cells (1) that are cascade-connected,
the plurality of converter cells each have a plurality of switching elements (31p, 31n), and a power storage element (32) connected to the plurality of switching elements, and
the control device includes:
a balance control unit (55) configured to generate a circulating-current command value to control a balance of voltages of power storage elements between the phases or between the arms, based on a balance command value; and
a circulating-current control unit (51) to control a circulating current circulating through the power converter, based on said circulating-current command value, **characterized in that**
the control device includes an oscillation control unit (57) to cause the balance command value to oscillate at a first frequency lower than a fundamental frequency of the alternating-current system, based on the voltages of the power storage elements included in the corresponding arm,
the oscillation control unit is configured to extract a maximum voltage value and a minimum voltage value of the power storage elements included in the corresponding arm, and
the oscillation control unit is configured to perform an oscillating control that superimposes an oscillating component of the first frequency onto the balance command value, based on a second difference between a minimum value of the maximum voltage values during a first period and a maximum value of the minimum voltage values during the first period, and
the oscillation control unit is configured to start the oscillating control when the second difference is greater than or equal to a third threshold.

4. The power conversion device according to claim 3, wherein
the oscillation control unit is configured, after the oscillating control is started, when the second difference is less than or equal to a fourth threshold less than the third threshold, to stop the oscillating control.

5. The power conversion device according to claim 3 or 4, wherein
the second difference is a value obtained by subtracting the maximum value from the minimum value.

6. The power conversion device according to claim 3 or 4, wherein
a rate of change in the minimum value and the maximum value is restricted by a rate-of-change limiter,
the second difference is a value obtained by subtracting the maximum value, whose rate of change is restricted, from the minimum value whose rate of change is restricted.

7. The power conversion device according to any one of claims 3 to 6, wherein
the first period is greater than or equal to a fundamental period of the alternating-current system.

8. A power conversion device (100) connectable to an alternating-current system (2), the power conversion device comprising:
a power converter (6) which includes a plurality of arms (13u, 13v, 13w, 14u, 14v, 14w) for each phase of the alternating-current system; and
a control device (5) to control the power converter, wherein
each arm, among the plurality of arms, has a plurality of converter cells (1) that are cascade-connected,
the plurality of converter cells each have a plurality of switching elements (31p, 31n), and a power storage element (32) connected to the plurality of switching elements, and
the control device includes:
a balance control unit (55) configured to generate a circulating-current command value to control a balance of voltages of power storage elements between the phases or between the arms, based on a balance command value; and
a circulating-current control unit (51) to control a circulating current circulating through the power converter, based on said circulating-current command value, **characterized in that**
the control device includes an oscillation control unit (57) to cause the balance command value to oscillate at a first frequency lower than a fundamental frequency of the alternating-current system, based on the voltages of the power storage elements included in the corresponding arm,
the oscillation control unit is configured, when an amplitude of a fundamental frequency component of an average voltage value of the power storage elements included in the corresponding arm is less than or equal to a fifth threshold, to start an oscillating control that superimposes an oscillating component of the first frequency onto the balance command value.

9. The power conversion device according to claim 8, wherein
the oscillation control unit is configured, when the fundamental frequency component is greater than or equal to a sixth threshold greater than the fifth threshold, to stop the oscillating control.

10. The power conversion device according to claim 8 or 9, wherein
the oscillation control unit is configured, when the fundamental frequency component is greater than or equal to the fifth threshold, to intermittently perform the oscillating control.

11. The power conversion device according to one of claims 1 to 10, wherein
the balance control unit is configured to generate the circulating-current command value for balancing the voltages of the power storage elements between the phases or between the arms.

12. The power conversion device according to any one of claims 1 to 11, wherein
the plurality of arms include a positive-side arm (13u, 13v, 13w) and a negative-side arm (14u, 14v, 14w), and
the balance command value includes a first average voltage value of the power storage elements included in the power converter and a second average voltage value of the power storage elements included in the positive-side arm, wherein
the balance control unit includes:
an inter-phase balance control unit (43) to cause the average voltage value of the power storage elements included in a phase to follow the first average voltage value to control the balance of the voltages of the power storage elements between phases;
an inter-arm balance control unit (44) to cause the average voltage value of the power storage elements included in the negative-side arm to follow the second average voltage value to control the balance of the voltages of the power storage elements between the plurality of arms; and
an adding unit (47) to add up an output value of the inter-phase balance control unit and an output value of the inter-arm balance control unit to generate the circulating-current command value.

13. The power conversion device according to claim 12, wherein
the oscillation control unit is configured to superimpose the oscillating component of the first frequency onto one of the first average voltage value and the second average voltage value.

## Patentansprüche

1. Leistungsumwandlungsvorrichtung (100), die an ein Wechselstromsystem (2) anschließbar ist, wobei die Leistungsumwandlungsvorrichtung aufweist:
einen Leistungswandler (6), der eine Vielzahl von Armen (13u, 13v, 13w, 14u, 14v, 14w) für jede Phase des Wechselstromsystems umfasst; und
eine Steuervorrichtung (5) zum Steuern des Leistungswandlers, wobei
jeder Arm aus der Vielzahl von Armen eine Vielzahl von Wandlerzellen (1) aufweist, die kaskadengeschaltet sind,
die Vielzahl von Wandlerzellen jeweils eine Vielzahl von Schaltelementen (31p, 31n) und ein Energiespeicherelement (32) aufweist, das mit der Vielzahl von Schaltelementen verbunden ist, und
die Steuervorrichtung umfasst:
eine Symmetrierungssteuereinheit (55), die eingerichtet ist, basierend auf einem Symmetrierungsbefehlswert einen Kreisstrom-Befehlswert zu erzeugen, um eine Symmetrie von Spannungen von Energiespeicherelementen zwischen den Phasen oder zwischen den Armen zu steuern; und
eine Kreisstrom-Steuereinheit (51) zum Steuern eines durch den Leistungswandler zirkulierenden Kreisstroms basierend auf dem Kreisstrom-Befehlswert, **dadurch gekennzeichnet, dass**
die Steuervorrichtung eine Schwingungssteuereinheit (57) umfasst, um zu bewirken, dass der Symmetrierungsbefehlswert basierend auf den Spannungen der in dem entsprechenden Arm enthaltenen Energiespeicherelemente mit einer ersten Frequenz schwingt, die niedriger als eine Grundfrequenz des Wechselstromsystems ist,
die Schwingungssteuereinheit eingerichtet ist, einen maximalen Spannungswert und einen minimalen Spannungswert der in dem entsprechenden Arm enthaltenen Energiespeicherelemente zu extrahieren, und
die Schwingungssteuereinheit eingerichtet ist, eine Schwingungssteuerung durchzuführen, die basierend auf einer ersten Differenz zwischen dem maximalen Spannungswert und dem minimalen Spannungswert eine Schwingungskomponente der ersten Frequenz dem Symmetrierungsbefehlswert überlagert, und
die Schwingungssteuereinheit eingerichtet ist, die Schwingungssteuerung zu starten, wenn die erste Differenz größer als oder gleich einem ersten Schwellenwert ist.

2. Leistungsumwandlungsvorrichtung nach Anspruch 1, wobei
die Schwingungssteuereinheit eingerichtet ist, nachdem die Schwingungssteuerung gestartet wurde, wenn die erste Differenz kleiner als oder gleich einem zweiten Schwellenwert ist, der kleiner als der erste Schwellenwert ist, die Schwingungssteuerung zu stoppen.

3. Leistungsumwandlungsvorrichtung (100), die an ein Wechselstromsystem (2) anschließbar ist, wobei die Leistungsumwandlungsvorrichtung aufweist:
einen Leistungswandler (6), der eine Vielzahl von Armen (13u, 13v, 13w, 14u, 14v, 14w) für jede Phase des Wechselstromsystems umfasst; und
eine Steuervorrichtung (5) zum Steuern des Leistungswandlers, wobei
jeder Arm aus der Vielzahl von Armen eine Vielzahl von Wandlerzellen (1) aufweist, die kaskadengeschaltet sind,
die Vielzahl von Wandlerzellen jeweils eine Vielzahl von Schaltelementen (31p, 31n) und ein Energiespeicherelement (32) aufweist, das mit der Vielzahl von Schaltelementen verbunden ist, und
die Steuervorrichtung umfasst:
eine Symmetrierungssteuereinheit (55), die eingerichtet ist, basierend auf einem Symmetrierungsbefehlswert einen Kreisstrom-Befehlswert zu erzeugen, um eine Symmetrie von Spannungen von Energiespeicherelementen zwischen den Phasen oder zwischen den Armen zu steuern; und
eine Kreisstrom-Steuereinheit (51) zum Steuern eines durch den Leistungswandler zirkulierenden Kreisstroms basierend auf dem Kreisstrom-Befehlswert, **dadurch gekennzeichnet, dass**
die Steuervorrichtung eine Schwingungssteuereinheit (57) umfasst, um zu bewirken, dass der Symmetrierungsbefehlswert basierend auf den Spannungen der in dem entsprechenden Arm enthaltenen Energiespeicherelemente mit einer ersten Frequenz schwingt, die niedriger als eine Grundfrequenz des Wechselstromsystems ist,
die Schwingungssteuereinheit eingerichtet ist, einen maximalen Spannungswert und einen minimalen Spannungswert der in dem entsprechenden Arm enthaltenen Energiespeicherelemente zu extrahieren, und
die Schwingungssteuereinheit eingerichtet ist, eine Schwingungssteuerung durchzuführen, die basierend auf einer zweiten Differenz zwischen einem minimalen Wert der maximalen Spannungswerte während einer ersten Periode und einem maximalen Wert der minimalen Spannungswerte während der ersten Periode eine Schwingungskomponente der ersten Frequenz dem Symmetrierungsbefehlswert überlagert, und
die Schwingungssteuereinheit eingerichtet ist, die Schwingungssteuerung zu starten, wenn die zweite Differenz größer als oder gleich einem dritten Schwellenwert ist.

4. Leistungsumwandlungsvorrichtung nach Anspruch 3, wobei
die Schwingungssteuereinheit eingerichtet ist, nachdem die Schwingungssteuerung gestartet wurde, wenn die zweite Differenz kleiner als oder gleich einem vierten Schwellenwert ist, der kleiner als der dritte Schwellenwert ist, die Schwingungssteuerung zu stoppen.

5. Leistungsumwandlungsvorrichtung nach Anspruch 3 oder 4, wobei
die zweite Differenz ein Wert ist, der durch Subtrahieren des maximalen Werts von dem minimalen Wert erhalten wird.

6. Leistungsumwandlungsvorrichtung nach Anspruch 3 oder 4, wobei
eine Änderungsrate des minimalen Werts und des maximalen Werts durch einen Änderungsratenbegrenzer beschränkt ist,
die zweite Differenz ein Wert ist, der durch Subtrahieren des maximalen Werts, dessen Änderungsrate beschränkt ist, von dem minimalen Wert, dessen Änderungsrate beschränkt ist, erhalten wird.

7. Leistungsumwandlungsvorrichtung nach einem der Ansprüche 3 bis 6, wobei die erste Periode größer als oder gleich einer Grundperiode des Wechselstromsystems ist.

8. Leistungsumwandlungsvorrichtung (100), die an ein Wechselstromsystem (2) anschließbar ist, wobei die Leistungsumwandlungsvorrichtung aufweist:
einen Leistungswandler (6), der eine Vielzahl von Armen (13u, 13v, 13w, 14u, 14v, 14w) für jede Phase des Wechselstromsystems umfasst; und
eine Steuervorrichtung (5) zum Steuern des Leistungswandlers, wobei
jeder Arm aus der Vielzahl von Armen eine Vielzahl von Wandlerzellen (1) aufweist, die kaskadengeschaltet sind,
die Vielzahl von Wandlerzellen jeweils eine Vielzahl von Schaltelementen (31p, 31n) und ein Energiespeicherelement (32) aufweist, das mit der Vielzahl von Schaltelementen verbunden ist, und
die Steuervorrichtung umfasst:
eine Symmetrierungssteuereinheit (55), die eingerichtet ist, basierend auf einem Symmetrierungsbefehlswert einen Kreisstrom-Befehlswert zu erzeugen, um eine Symmetrie von Spannungen von Energiespeicherelementen zwischen den Phasen oder zwischen den Armen zu steuern; und
eine Kreisstrom-Steuereinheit (51) zum Steuern eines durch den Leistungswandler zirkulierenden Kreisstroms basierend auf dem Kreisstrom-Befehlswert, **dadurch gekennzeichnet, dass**
die Steuervorrichtung eine Schwingungssteuereinheit (57) umfasst, um zu bewirken, dass der Symmetrierungsbefehlswert basierend auf den Spannungen der in dem entsprechenden Arm enthaltenen Energiespeicherelemente mit einer ersten Frequenz schwingt, die niedriger als eine Grundfrequenz des Wechselstromsystems ist,
die Schwingungssteuereinheit eingerichtet ist, wenn eine Amplitude einer Grundfrequenzkomponente eines durchschnittlichen Spannungswerts der in dem entsprechenden Arm enthaltenen Energiespeicherelemente kleiner als oder gleich einem fünften Schwellenwert ist, eine Schwingungssteuerung zu starten, die eine Schwingungskomponente der ersten Frequenz dem Symmetrierungsbefehlswert überlagert.

9. Leistungsumwandlungsvorrichtung nach Anspruch 8, wobei
die Schwingungssteuereinheit eingerichtet ist, wenn die Grundfrequenzkomponente größer als oder gleich einem sechsten Schwellenwert ist, der größer als der fünfte Schwellenwert ist, die Schwingungssteuerung zu stoppen.

10. Leistungsumwandlungsvorrichtung nach Anspruch 8 oder 9, wobei
die Schwingungssteuereinheit eingerichtet ist, wenn die Grundfrequenzkomponente größer als oder gleich dem fünften Schwellenwert ist, die Schwingungssteuerung intermittierend durchzuführen.

11. Leistungsumwandlungsvorrichtung nach einem der Ansprüche 1 bis 10, wobei
die Symmetrierungssteuereinheit eingerichtet ist, den Kreisstrom-Befehlswert zum Symmetrieren der Spannungen der Energiespeicherelemente zwischen den Phasen oder zwischen den Armen zu erzeugen.

12. Leistungsumwandlungsvorrichtung nach einem der Ansprüche 1 bis 11, wobei
die Vielzahl von Armen einen positivseitigen Arm (13u, 13v, 13w) und einen negativseitigen Arm (14u, 14v, 14w) umfasst, und
der Symmetrierungsbefehlswert einen ersten durchschnittlichen Spannungswert der in dem Leistungswandler enthaltenen Energiespeicherelemente und einen zweiten durchschnittlichen Spannungswert der in dem positivseitigen Arm enthaltenen Energiespeicherelemente umfasst, wobei
die Symmetrierungssteuereinheit umfasst:
eine Zwischenphasen-Symmetrierungssteuereinheit (43), um zu bewirken, dass der durchschnittliche Spannungswert der in einer Phase enthaltenen Energiespeicherelemente dem ersten durchschnittlichen Spannungswert folgt, um die Symmetrie der Spannungen der Energiespeicherelemente zwischen den Phasen zu steuern;
eine Zwischenarm-Symmetrierungssteuereinheit (44), um zu bewirken, dass der durchschnittliche Spannungswert der in dem negativseitigen Arm enthaltenen Energiespeicherelemente dem zweiten durchschnittlichen Spannungswert folgt, um die Symmetrie der Spannungen der Energiespeicherelemente zwischen der Vielzahl von Armen zu steuern; und
eine Addiereinheit (47), um einen Ausgangswert der Zwischenphasen-Symmetrierungssteuereinheit und einen Ausgangswert der Zwischenarm-Symmetrierungssteuereinheit zu addieren, um den Kreisstrom-Befehlswert zu erzeugen.

13. Leistungsumwandlungsvorrichtung nach Anspruch 12, wobei
die Schwingungssteuereinheit eingerichtet ist, die Schwingungskomponente der ersten Frequenz entweder dem ersten durchschnittlichen Spannungswert oder dem zweiten durchschnittlichen Spannungswert zu überlagern.

## Revendications

1. Dispositif de conversion d'énergie (100) pouvant être connecté à un système à courant alternatif (2), le dispositif de conversion d'énergie comprenant :
un convertisseur d'énergie (6) qui comporte une pluralité de bras (13u, 13v, 13w, 14u, 14v, 14w) pour chaque phase du système à courant alternatif ; et
un dispositif de commande (5) configuré pour commander le convertisseur d'énergie, dans lequel
chaque bras, parmi la pluralité de bras, a une pluralité de cellules de convertisseur (1) qui sont connectées en cascade,
la pluralité de cellules de convertisseur ont chacune une pluralité d'éléments de commutation (31p, 31n), et un élément de stockage d'énergie (32) connecté à la pluralité d'éléments de commutation, et
le dispositif de commande comporte :
une unité de commande d'équilibrage (55) configurée pour générer une valeur de consigne de courant de circulation pour commander un équilibrage de tensions d'éléments de stockage d'énergie entre les phases ou entre les bras, sur la base d'une valeur de consigne d'équilibrage ; et
une unité de commande de courant de circulation (51) pour commander un courant de circulation circulant à travers le convertisseur d'énergie, sur la base de ladite valeur de consigne de courant de circulation, **caractérisé en ce que**
le dispositif de commande comporte une unité de commande d'oscillation (57) pour amener la valeur de consigne d'équilibrage à osciller à une première fréquence inférieure à une fréquence fondamentale du système à courant alternatif, sur la base des tensions des éléments de stockage d'énergie inclus dans le bras correspondant
l'unité de commande d'oscillation est configurée pour extraire une valeur de tension maximale et une valeur de tension minimale des éléments de stockage d'énergie inclus dans le bras correspondant, et
l'unité de commande d'oscillation est configurée pour réaliser une commande oscillante qui superpose une composante oscillante de la première fréquence sur la valeur de consigne d'équilibrage, sur la base d'une première différence entre la valeur de tension maximale et la valeur de tension minimale, et
l'unité de commande d'oscillation est configurée pour démarrer la commande oscillante lorsque la première différence est supérieure ou égale à un premier seuil.

2. Dispositif de conversion d'énergie selon la revendication 1, dans lequel
l'unité de commande d'oscillation est configurée, après que la commande oscillante est démarrée, lorsque la première différence est inférieure ou égale à un deuxième seuil inférieur au premier seuil, pour arrêter la commande oscillante.

3. Dispositif de conversion d'énergie (100) pouvant être connecté à un système à courant alternatif (2), le dispositif de conversion d'énergie comprenant :
un convertisseur d'énergie (6) qui comporte une pluralité de bras (13u, 13v, 13w, 14u, 14v, 14w) pour chaque phase du système à courant alternatif ; et
un dispositif de commande (5) configuré pour commander le convertisseur d'énergie, dans lequel
chaque bras, parmi la pluralité de bras, a une pluralité de cellules de convertisseur (1) qui sont connectées en cascade,
la pluralité de cellules de convertisseur comportent chacune une pluralité d'éléments de commutation (31p,31n), et un élément de stockage d'énergie (32) connecté à la pluralité d'éléments de commutation, et
le dispositif de commande comporte :
une unité de commande d'équilibrage (55) configurée pour générer une valeur de consigne de courant de circulation pour commander un équilibrage de tensions d'éléments de stockage d'énergie entre les phases ou entre les bras, sur la base d'une valeur de consigne d'équilibrage ; et
une unité de commande de courant de circulation (51) pour commander un courant de circulation circulant à travers le convertisseur d'énergie, sur la base de ladite valeur de consigne de courant de circulation, **caractérisé en ce que**
le dispositif de commande comporte une unité de commande d'oscillation (57) pour amener la valeur de consigne d'équilibrage à osciller à une première fréquence inférieure à une fréquence fondamentale du système à courant alternatif, sur la base des tensions des éléments de stockage d'énergie inclus dans le bras correspondant,
l'unité de commande d'oscillation est configurée pour extraire une valeur de tension maximale et une valeur de tension minimale des éléments de stockage d'énergie inclus dans le bras correspondant, et
l'unité de commande d'oscillation est configurée pour réaliser une commande oscillante qui superpose une composante oscillante de la première fréquence sur la valeur de consigne d'équilibrage, sur la base d'une seconde différence entre une valeur minimale des valeurs de tension maximale pendant une première période et une valeur maximale des valeurs de tension minimale pendant la première période, et
l'unité de commande d'oscillation est configurée pour démarrer la commande oscillante lorsque la seconde différence est supérieure ou égale à un troisième seuil.

4. Dispositif de conversion d'énergie selon la revendication 3, dans lequel
l'unité de commande d'oscillation est configurée, après que la commande oscillante est démarrée, lorsque la seconde différence est inférieure ou égale à un quatrième seuil inférieur au troisième seuil, pour arrêter la commande oscillante.

5. Dispositif de conversion d'énergie selon la revendication 3 ou 4, dans lequel
la seconde différence est une valeur obtenue en soustrayant la valeur maximale de la valeur minimale.

6. Dispositif de conversion d'énergie selon la revendication 3 ou 4, dans lequel
un taux de variation de la valeur minimale et de la valeur maximale est limité par un limiteur de taux de variation,
la seconde différence est une valeur obtenue en soustrayant la valeur maximale, dont le taux de variation est restreint, de la valeur minimale dont le taux de variation est restreint.

7. Dispositif de conversion d'énergie selon l'une quelconque des revendications 3 à 6, dans lequel
la première période est supérieure ou égale à une période fondamentale du système à courant alternatif.

8. Dispositif de conversion d'énergie (100) pouvant être connecté à un système à courant alternatif (2), le dispositif de conversion d'énergie comprenant :
un convertisseur d'énergie (6) qui comporte une pluralité de bras (13u, 13v, 13w, 14u, 14v, 14w) pour chaque phase du système à courant alternatif ; et
un dispositif de commande (5) configuré pour commander le convertisseur d'énergie, dans lequel
chaque bras, parmi la pluralité de bras, a une pluralité de cellules de convertisseur (1) qui sont connectées en cascade,
la pluralité de cellules de convertisseur comportent chacune une pluralité d'éléments de commutation (31p,31n), et un élément de stockage d'énergie (32) connecté à la pluralité d'éléments de commutation, et
le dispositif de commande comporte :
une unité de commande d'équilibrage (55) configurée pour générer une valeur de consigne de courant de circulation pour commander un équilibrage de tensions d'éléments de stockage d'énergie entre les phases ou entre les bras, sur la base d'une valeur de consigne d'équilibrage ; et
une unité de commande de courant de circulation (51) pour commander un courant de circulation circulant à travers le convertisseur d'énergie, sur la base de ladite valeur de consigne de courant de circulation, **caractérisé en ce que**
le dispositif de commande comporte une unité de commande d'oscillation (57) pour amener la valeur de consigne d'équilibrage à osciller à une première fréquence inférieure à une fréquence fondamentale du système à courant alternatif, sur la base des tensions des éléments de stockage d'énergie inclus dans le bras correspondant,
l'unité de commande d'oscillation est configurée, lorsqu'une amplitude d'une composante de fréquence fondamentale d'une valeur de tension moyenne des éléments de stockage d'énergie inclus dans le bras correspondant est inférieure ou égale à un cinquième seuil, pour démarrer une commande oscillante qui superpose une composante oscillante de la première fréquence sur la valeur de consigne d'équilibrage.

9. Dispositif de conversion d'énergie selon la revendication 8, dans lequel
l'unité de commande d'oscillation est configurée, lorsque la composante de fréquence fondamentale est supérieure ou égale à un sixième seuil supérieur au cinquième seuil, pour arrêter la commande oscillante.

10. Dispositif de conversion d'énergie selon la revendication 8 ou 9, dans lequel
l'unité de commande d'oscillation est configurée, lorsque la composante de fréquence fondamentale est supérieure ou égale au cinquième seuil, pour réaliser de manière intermittente la commande oscillante.

11. Dispositif de conversion d'énergie selon l'une quelconque des revendications 1 à 10, dans lequel
l'unité de commande d'équilibrage est configurée pour générer la valeur de consigne de courant de circulation pour équilibrer les tensions des éléments de stockage d'énergie entre les phases ou entre les bras.

12. Dispositif de conversion d'énergie selon l'une quelconque des revendications 1 à 11, dans lequel la pluralité de bras comporte un bras côté positif (13u, 13v, 13w) et un bras côté négatif (14u, 14v, 14w), et
la valeur de consigne d'équilibrage comporte une première valeur de tension moyenne des éléments de stockage d'énergie inclus dans le convertisseur d'énergie et une seconde valeur de tension moyenne des éléments de stockage d'énergie inclus dans le bras côté positif, dans lequel
l'unité de commande d'équilibrage comporte :
une unité de commande d'équilibrage inter-phases (43) pour amener la valeur de tension moyenne des éléments de stockage d'énergie inclus dans une phase à suivre la première valeur de tension moyenne pour commander l'équilibrage des tensions des éléments de stockage d'énergie entre des phases ;
une unité de commande d'équilibrage inter-bras (44) pour amener la valeur de tension moyenne des éléments de stockage d'énergie inclus dans le bras côté négatif à suivre la seconde valeur de tension moyenne pour commander l'équilibrage des tensions des éléments de stockage d'énergie entre la pluralité de bras ; et
une unité d'addition (47) pour additionner une valeur de sortie de l'unité de commande d'équilibrage inter-phases et une valeur de sortie de l'unité de commande d'équilibrage inter-bras pour générer la valeur de consigne de courant de circulation.

13. Dispositif de conversion d'énergie selon la revendication 12, dans lequel
l'unité de commande d'oscillation est configurée pour superposer la composante oscillante de la première fréquence sur une parmi la première valeur de tension moyenne et la seconde valeur de tension moyenne.
